(19) Europäisches Patentamt
European Patent Office
Office européen des brevets

(11) EP 3 044 265 B1

(12) EUROPEAN PATENT SPECIFICATION

(45) Date of publication and mention of the grant of the patent:
**19.05.2021 Bulletin 2021/20**

(21) Application number: **14851426.8**

(22) Date of filing: **15.09.2014**

(51) Int Cl.:
***C08L 69/00*** *(2006.01)* ***C08L 51/04*** *(2006.01)*
***C08L 55/02*** *(2006.01)* ***C08L 71/02*** *(2006.01)*
***C08K 3/00*** *(2018.01)* ***C08K 3/34*** *(2006.01)*

(86) International application number:
**PCT/US2014/055547**

(87) International publication number:
**WO 2015/069380 (14.05.2015 Gazette 2015/19)**

# (54) MINERAL REINFORCED THERMOPLASTIC POLYMER COMPOSITIONS WITH IMPROVED PROPERTIES

MINERALVERSTÄRKTE THERMOPLASTISCHEN POLYMERZUSAMMENSETZUNGEN MIT VERBESSERTEN EIGENSCHAFTEN

COMPOSITIONS POLYMÈRES THERMOPLASTIQUES RENFORCÉES PAR MINÉRAUX AYANT DES PROPRIÉTÉS AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2013 US 201314026651**

(43) Date of publication of application:
**20.07.2016 Bulletin 2016/29**

(73) Proprietor: **SABIC Global Technologies B.V.**
**4612 PX Bergen op Zoom (NL)**

(72) Inventors:
- **DAGA, Vikram K.**
  **Mt. Vernon, Indiana 47620-9367 (US)**
- **DE RUDDER, James Louis**
  **Mt. Vernon, Indiana 47620-9367 (US)**

(74) Representative: **Sabic Intellectual Property Group**
**Sabic Intellectual Property Department**
**P.O. Box 3008**
**6160 GA Geleen (NL)**

(56) References cited:
**EP-A1- 0 728 802**
**EP-A2- 0 994 155**
**WO-A1-2009/017938**
**WO-A1-2014/160084**
**US-A1- 2003 171 472**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 044 265 B1

## Description

### FIELD OF INVENTION

The present invention relates to thermoplastic compositions comprising one or more polycarbonate polymer, a mineral filler, and a poly(alkylene oxide) based additive having improved properties.

### BACKGROUND OF THE INVENTION

Polycarbonates when impact modified with rubbery components provide a unique combination of properties such as impact strength, modulus, flowability and thermal resistance which enables the applications of such engineering thermoplastics in a wide variety of applications especially where large parts or parts with complex design are required. Mineral reinforced high modulus ductile Polycarbonate-poly(acrylonitrile-butadiene-styrene) (PC/ABS) blends can provide higher stiffness, dimensional stability and impact balance, while maintaining adequate flow for filling out tools with complex geometries in the automotive applications. This combination of material and processing properties opens up exciting possibilities for automotive parts such as spoilers, IP-retainers, interior-trim pieces, electronic and electrical goods, as well as in furniture applications, where good dimensional stability provides design freedom in complex part assembly. WO 2009/017938 discloses a thermoplastic composition comprising from 65 to 80 wt.% of a polycarbonate, from 2 to 10 wt.% of a polycarbonate-polysiloxane copolymer, from 15 to 25 wt.% an impact modifier composition comprising ABS or BABS and a second impact modifier different from BABS or ABS, from 1 to 10 wt.% of an aromatic vinyl copolymer, and from 1 to 3 wt.% total of a combination of at least three different mold release additives, wherein a molded sample of the thermoplastic composition has better cracking performance compared to a sample of the same thermoplastic composition without the combination of three mold release additives.

Use of mineral fillers in thermoplastic resins, with the property improvements of properties described above, can result in important improvements to articles and parts. However, improvements in one or more properties can often adversely affect other properties. For example, stiffness of the material can be increased by sacrificing impact and/or flow, or flow can be improved with a corresponding decrease in impact, HDT, and/or stiffness. Selecting the balance in properties, for example, increasing flow while increasing or even maintaining the same impact, HDT and stiffness is typically system-dependent and a complex technical problem with limited solutions.

Accordingly, it would be beneficial to provide polycarbonate compositions which include mineral fillers that have improved flow and impact properties while retaining other desirable properties such as, for example, modulus, and heat deflection temperature (HDT). These needs and other needs are met by the various aspects of the present invention.

### SUMMARY OF THE INVENTION

In one aspect, the invention relates to polycarbonate compositions comprising mineral fillers which also have increased flow and impact properties. In various aspects, the invention relates to thermoplastic compositions comprising two or more polycarbonate polymers, an impact modifier, a mineral filler, and a poly(alkylene oxide) additive. Thus, in a further aspect, the resulting compositions are therefore capable of being used in the production of articles wherein excellent flow properties are required. In particular the invention relates to a composition as defined in claim 1, an article as defined in claim 14 and a method as defined in claim 15. Preferred embodiments to which the invention relates are defined in the dependent claims.

Additional advantages of the invention will be set forth in part in the description which follows, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

### DETAILED DESCRIPTION OF THE INVENTION

The present invention can be understood more readily by reference to the following detailed description of the invention and the Examples included therein.

Before the present compounds, compositions, articles, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Although any methods and materials similar or equivalent to those described herein can be used in the practice or testing of the present invention, example methods and materials are now described.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

**DEFINITIONS**

It is also o be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate polymer" includes mixtures of two or more polycarbonate polymers.

As used herein, the term "combination" is inclusive of blends, mixtures, alloys, reaction products, and the like.

Ranges can be expressed herein as from one particular value, and/or to another particular value. When such a range is expressed, another aspect includes from the one particular value and/or to the other particular value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed. The modifier "about" used in connection with a quantity is inclusive of the stated value and has the meaning dictated by the context (e.g., includes the degree of error associated with measurement of the particular quantity).

As used herein, the terms "about" and "at or about" mean that the amount or value in question can be the value designated some other value approximately or about the same. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

The terms "first," "second," "first part," "second part," and the like, where used herein, do not denote any order, quantity, or importance, and are used to distinguish one element from another, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and unsubstituted alkyl groups.

As used herein, the term "effective amount" refers to an amount that is sufficient to achieve the desired modification of a physical property of the composition or material. For example, an "effective amount" of a alkyl sulfonate refers to an amount that is sufficient to achieve the desired improvement in the property modulated by the formulation component, e.g., improved mold release properties, under applicable test conditions and without adversely affecting other specified properties. The specific level in terms of wt% in a composition required as an effective amount will depend upon a variety of factors including the amount and type of polycarbonate, amount and type of impact modifier, amount and type of talc, and end use of the article made using the composition.

Disclosed are the components to be used to prepare the compositions of the invention as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed

and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the invention. Thus, if there are a variety of additional steps that can be performed it is understood that each of these additional steps can be performed with any specific aspect or combination of aspects of the methods of the invention.

References in the specification and concluding claims to parts by weight, of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent ("wt%") of a component, unless specifically stated to the contrary, is based on the total weight of the formulation or composition in which the component is included. For example if a particular element or component in a composition or article is said to have 8% by weight, it is understood that this percentage is relative to a total compositional percentage of 100% by weight.

Compounds are described using standard nomenclature. For example, any position not substituted by any indicated group is understood to have its valence filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this invention belongs.

The term "alkyl group" as used herein is a branched or unbranched saturated hydrocarbon group of 1 to 24 carbon atoms, such as methyl, ethyl, n propyl, isopropyl, n butyl, isobutyl, t butyl, pentyl, hexyl, heptyl, octyl, decyl, tetradecyl, hexadecyl, eicosyl, tetracosyl and the like. A "lower alkyl" group is an alkyl group containing from one to six carbon atoms.

The term "aryl group" as used herein is any carbon-based aromatic group including, but not limited to, benzene, naphthalene, etc. The term "aromatic" also includes "heteroaryl group," which is defined as an aromatic group that has at least one heteroatom incorporated within the ring of the aromatic group. Examples of heteroatoms include, but are not limited to, nitrogen, oxygen, sulfur, and phosphorus. The aryl group can be substituted or unsubstituted. The aryl group can be substituted with one or more groups including, but not limited to, alkyl, alkynyl, alkenyl, aryl, halide, nitro, amino, ester, ketone, aldehyde, hydroxy, carboxylic acid, or alkoxy.

The term "aralkyl" as used herein is an aryl group having an alkyl, alkynyl, or alkenyl group as defined above attached to the aromatic group. An example of an aralkyl group is a benzyl group.

The term "carbonate group" as used herein is represented by the formula OC(O)OR, where R can be hydrogen, an alkyl, alkenyl, alkynyl, aryl, aralkyl, cycloalkyl, halogenated alkyl, or heterocycloalkyl group described above.

The term "organic residue" defines a carbon containing residue, i.e., a residue comprising at least one carbon atom, and includes but is not limited to the carbon-containing groups, residues, or radicals defined hereinabove. Organic residues can contain various heteroatoms, or be bonded to another molecule through a heteroatom, including oxygen, nitrogen, sulfur, phosphorus, or the like. Examples of organic residues include but are not limited alkyl or substituted alkyls, alkoxy or substituted alkoxy, mono or di-substituted amino, amide groups, etc. Organic residues can preferably comprise 1 to 18 carbon atoms, 1 to 15, carbon atoms, 1 to 12 carbon atoms, 1 to 8 carbon atoms, 1 to 6 carbon atoms, or 1 to 4 carbon atoms. In a further aspect, an organic residue can comprise 2 to 18 carbon atoms, 2 to 15, carbon atoms, 2 to 12 carbon atoms, 2 to 8 carbon atoms, 2 to 4 carbon atoms, or 2 to 4 carbon atoms.

A very close synonym of the term "residue" is the term "radical," which as used in the specification and concluding claims, refers to a fragment, group, or substructure of a molecule described herein, regardless of how the molecule is prepared. For example, a 2,4-dihydroxyphenyl radical in a particular compound has the structure:

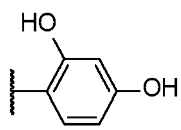,

regardless of whether 2,4-dihydroxyphenyl is used to prepare the compound. In some embodiments the radical (for example an alkyl) can be further modified (i.e., substituted alkyl) by having bonded thereto one or more "substituent

radicals." The number of atoms in a given radical is not critical to the present invention unless it is indicated to the contrary elsewhere herein.

"Organic radicals," as the term is defined and used herein, contain one or more carbon atoms. An organic radical can have, for example, 1-26 carbon atoms, 1-18 carbon atoms, 1-12 carbon atoms, 1-8 carbon atoms, 1-6 carbon atoms, or 1-4 carbon atoms. In a further aspect, an organic radical can have 2-26 carbon atoms, 2-18 carbon atoms, 2-12 carbon atoms, 2-8 carbon atoms, 2-6 carbon atoms, or 2-4 carbon atoms. Organic radicals often have hydrogen bound to at least some of the carbon atoms of the organic radical. One example, of an organic radical that comprises no inorganic atoms is a 5, 6, 7, 8-tetrahydro-2-naphthyl radical. In some embodiments, an organic radical can contain 1-10 inorganic heteroatoms bound thereto or therein, including halogens, oxygen, sulfur, nitrogen, phosphorus, and the like. Examples of organic radicals include but are not limited to an alkyl, substituted alkyl, cycloalkyl, substituted cycloalkyl, mono-substituted amino, di-substituted amino, acyloxy, cyano, carboxy, carboalkoxy, alkylcarboxamide, substituted alkylcarboxamide, dialkylcarboxamide, substituted dialkylcarboxamide, alkylsulfonyl, alkylsulfinyl, thioalkyl, thiohaloalkyl, alkoxy, substituted alkoxy, haloalkyl, haloalkoxy, aryl, substituted aryl, heteroaryl, heterocyclic, or substituted heterocyclic radicals, wherein the terms are defined elsewhere herein. A few non-limiting examples of organic radicals that include heteroatoms include alkoxy radicals, trifluoromethoxy radicals, acetoxy radicals, dimethylamino radicals and the like.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA" or "bisphenol A," which can be used interchangeably, as used herein refers to a compound having a structure represented by the formula:

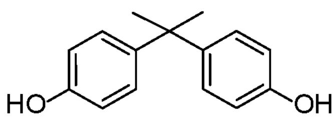

,

BisA can also be referred to by the name 4,4'-(propane-2,2-diyl)diphenol; *p,p'*-isopropylidenebisphenol; or 2,2-bis(4-hydroxyphenyl)propane.. BisA has the CAS # 80-05-7.

As used herein, "polycarbonate" refers to an oligomer or polymer comprising residues of one or more dihydroxy compounds, e.g. dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein, the term "ABS" or "acrylonitrile-butadiene-styrene copolymer" refers to an acrylonitrile-butadiene-styrene polymer which can be an acrylonitrile-butadiene-styrene terpolymer or a blend of styrene-butadiene rubber and styrene-acrylonitrile copolymer.

As used herein, the term "impact modifier" refers to a component of the disclosed impact modified thermoplastic compositions wherein the impact modifier is a polymeric material effective in improving the impact properties of the disclosed impact modified polycarbonate blend compositions, e.g. the notched Izod impact strength of the composition. As used herein, an impact modifier can be a one or more polymers such as acrylonitrile butadiene styrene copolymer (ABS), methacrylate butadiene styrene copolymer (MBS), and/or bulk polymerized ABS (BABS).

The term "talc" is used herein to mean a mineral composed of hydrated magnesium silicate.

As used herein the terms "weight percent," "wt%," and "wt. %," which can be used interchangeably, indicate the percent by weight of a given component based on the total weight of the composition, unless otherwise specified. That is, unless otherwise specified, all weight percent values are based on the total weight of the composition. It should be understood that the sum of weight percent values for all components in a disclosed composition or formulation are equal to 100.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

## BLENDED POLYCARBONATE COMPOSITIONS

As briefly described above, the present disclosure relates to compositions, articles of manufacture and methods as defined in the claims.

## POLYCARBONATE POLYMER

In one aspect, the disclosed thermoplastic compositions with improved flow properties of the present invention comprise a polycarbonate polymer composition. In various aspects, the disclosed thermoplastic compositions can also have useful mechanical properties such as impact strength and modulus.

In one aspect, a polycarbonate can comprise any polycarbonate material or mixture of materials, for example, as recited in U.S. Patent No. 7,786,246, which is disclosing various polycarbonate compositions and methods. The term polycarbonate can be further defined as compositions have repeating structural units of the formula (1):

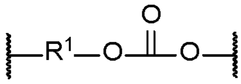 (1),

in which at least 60 percent of the total number of $R^1$ groups are aromatic organic radicals and the balance thereof are aliphatic, alicyclic, or aromatic radicals. Preferably, each $R^1$ is an aromatic organic radical and, more preferably, a radical of the formula (2):

$$-A^1-Y^1-A^2- \quad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$ or example, radicals of this type include, but are not limited to, radicals such as -O-, -S-, -S(O) -, $-S(O_2)$ -, -C(O) -, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such

as methylene, cyclohexylidene, or isopropylidene.

In a further aspect, polycarbonates can be produced by the interfacial reaction of dihydroxy compounds having the formula $HO—R^1—OH$, which includes dihydroxy compounds of formula (3):

$$HO\text{-}A^1\text{-}Y^1\text{-}A^2\text{-}OH \quad (3),$$

wherein $Y^1$, $A^1$ and $A^2$ are as described above. Also included are bisphenol compounds of general formula (4):

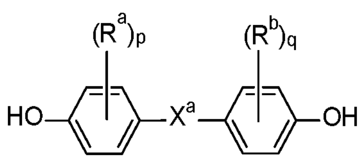
,

wherein $R^a$ and $R^b$ each represent a halogen atom or a monovalent hydrocarbon group and can be the same or different; p and q are each independently integers from 0 to 4; and $X^a$ represents one of the groups of formula (5):

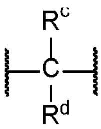
or
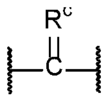
,

wherein $R^c$ and $R^d$ each independently represent a hydrogen atom or a monovalent linear or cyclic hydrocarbon group and $R^e$ is a divalent hydrocarbon group.

In various aspects, examples of suitable dihydroxy compounds include the dihydroxy-substituted hydrocarbons disclosed by name or formula (generic or specific) in U.S. Pat. No. 4,217,438. A nonexclusive list of specific examples of suitable dihydroxy compounds includes the following: resorcinol, 4-bromoresorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1 - naphthylmethane, 1,2-bis(4-hydroxyphenyl)ethane, 1,1-bis(4-hydroxyphenyl)-1-phenyl ethane, 2-(4-hydroxyphenyl)-2-(3 -hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1 -bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, 2,7-dihydroxycarbazole, 3,3-bis(4-hydroxyphenyl)phthalimidine, 2-phenyl-3,3-bis-(4-hydroxyphenyl)phthalimidine (PPPBP), and the like, as well as mixtures including at least one of the foregoing dihydroxy compounds.

In a further aspect, examples of the types of bisphenol compounds that can be represented by formula (3) includes 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl) n-butane, 2,2-bis(4-hydroxy-1-methylphenyl)propane, and 1,1-bis(4-hydroxy-t-butylphenyl)propane. Combinations including at least one of the foregoing dihydroxy compounds can also be used.

In various aspects, a polycarbonate can employ two or more different dihydroxy compounds or a copolymer of a dihydroxy compounds with a glycol or with a hydroxy- or acid-terminated polyester or with a dibasic acid or hydroxy acid in the event a carbonate copolymer rather than a homopolymer is desired for use. Polyarylates and polyester-carbonate resins or their blends can also be employed. Branched polycarbonates are also useful, as well as blends of linear polycarbonate and a branched polycarbonate. The branched polycarbonates can be prepared by adding a branching agent during polymerization.

In a further aspect, the branching agents include polyfunctional organic compounds containing at least three functional groups selected from hydroxyl, carboxyl, carboxylic anhydride, haloformyl, and mixtures thereof. Specific examples include trimellitic acid, trimellitic anhydride, trimellitic trichloride, tris-p-hydroxy phenyl ethane, isatin-bisphenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of from 0.05-2.0 weight percent. Branching agents and procedures for making branched polycarbonates are described in U.S. Pat. Nos. 3,635,895 and 4,001,184. All types of polycarbonate end groups are contemplated as being useful in the thermoplastic composition.

In a further aspect, the polycarbonates are based on bisphenol A, in which each of $A^1$ and $A^2$ is p-phenylene and $Y^1$ is isopropylidene. In a still further aspect, the molecular weight (Mw) of the polycarbonate is about 10,000 to about 100,000. In a yet further aspect, the polycarbonate has a Mw of about 15,000 to about 55,000. In an even further aspect, the polycarbonate has a Mw of about 18,000 to about 40,000.

Polycarbonates, including isosorbide-based polyester-polycarbonate, can comprise copolymers comprising carbonate units and other types of polymer units, including ester units, and combinations comprising at least one of homopolycarbonates and copolycarbonates. An exemplary polycarbonate copolymer of this type is a polyester carbonate, also known as a polyester-polycarbonate. Such copolymers further contain carbonate units derived from oligomeric ester-containing dihydroxy compounds (also referred to herein as hydroxy end-capped oligomeric acrylate esters).

In one aspect, polycarbonates can be manufactured using an interfacial phase transfer process or melt polymerization. Although the reaction conditions for interfacial polymerization can vary, an exemplary process generally involves dissolving or dispersing a dihydric phenol reactant in aqueous caustic soda or potash, adding the resulting mixture to a water-immiscible solvent medium such as for example methylene chloride, and contacting the reactants with a carbonate precursor (such as phosgene) in the presence of a catalyst such as, for example, triethylamine or a phase transfer catalyst salt, under controlled pH conditions of, for example, from about 8 to about 10.

The polycarbonate compounds and polymers disclosed herein can, in various aspects, be prepared by a melt polymerization process. Generally, in the melt polymerization process, polycarbonates are prepared by co-reacting, in a molten state, the dihydroxy reactant(s) (i.e., isosorbide, aliphatic diol and/or aliphatic diacid, and any additional dihydroxy compound) and a diaryl carbonate ester, such as diphenyl carbonate, or more specifically in an aspect, an activated carbonate such as bis(methyl salicyl)carbonate, in the presence of a transesterification catalyst. The reaction can be carried out in typical polymerization equipment, such as one or more continuously stirred reactors (CSTRs), plug flow reactors, wire wetting fall polymerizers, free fall polymerizers, wiped film polymerizers, BANBURY® mixers, single or twin screw extruders, or combinations of the foregoing. In one aspect, volatile monohydric phenol can be removed from the molten reactants by distillation and the polymer is isolated as a molten residue.

The melt polymerization can include a transesterification catalyst comprising a first catalyst, also referred to herein as an alpha catalyst, comprising a metal cation and an anion. In an aspect, the cation is an alkali or alkaline earth metal comprising Li, Na, K, Cs, Rb, Mg, Ca, Ba, Sr, or a combination comprising at least one of the foregoing. The anion is hydroxide ($OH^-$), superoxide ($O^{2-}$), thiolate ($HS^-$), sulfide ($S^{2-}$), a $C_{1-20}$ alkoxide, a $C_{6-20}$ aryloxide, a $C_{1-20}$ carboxylate, a phosphate including biphosphate, a $C_{1-20}$ phosphonate, a sulfate including bisulfate, sulfites including bisulfites and metabisulfites, a $C_{1-20}$ sulfonate, a carbonate including bicarbonate, or a combination comprising at least one of the foregoing. In another aspect, salts of an organic acid comprising both alkaline earth metal ions and alkali metal ions can also be used. Salts of organic acids useful as catalysts are illustrated by alkali metal and alkaline earth metal salts of formic acid, acetic acid, stearic acid and ethyelenediaminetetraacetic acid. The catalyst can also comprise the salt of a non-volatile inorganic acid. By "nonvolatile", it is meant that the referenced compounds have no appreciable vapor pressure at ambient temperature and pressure. In particular, these compounds are not volatile at temperatures at which melt polymerizations of polycarbonate are typically conducted. The salts of nonvolatile acids are alkali metal salts of phosphites; alkaline earth metal salts of phosphites; alkali metal salts of phosphates; and alkaline earth metal salts of phosphates. Exemplary transesterification catalysts include, lithium hydroxide, sodium hydroxide, potassium hydroxide, cesium hydroxide, magnesium hydroxide, calcium hydroxide, barium hydroxide, lithium formate, sodium formate, potassium formate, cesium formate, lithium acetate, sodium acetate, potassium acetate, lithium carbonate, sodium carbonate, potassium carbonate, lithium methoxide, sodium methoxide, potassium methoxide, lithium ethoxide, sodium ethoxide, potassium ethoxide, lithium phenoxide, sodium phenoxide, potassium phenoxide, sodium sulfate, potassium sulfate, $NaH_2PO_3$, $NaH_2PO_4$, $Na_2H_2PO_3$, $KH_2PO_4$, $CSH_2PO_4$, $CS_2H_2PO_4$, $Na_2SO_3$, $Na_2S_2O_5$, sodium mesylate, potassium mesylate, sodium tosylate, potassium tosylate, magnesium disodium ethylenediamine tetraacetate (EDTA magnesium disodium salt), or a combination comprising at least one of the foregoing. It will be understood that the foregoing list is exemplary and should not be considered as limited thereto. In one aspect, the transesterification catalyst is an alpha catalyst comprising an alkali or alkaline earth salt. In an exemplary aspect, the transesterification catalyst comprising sodium hydroxide, potassium hydroxide, sodium carbonate, potassium carbonate, sodium methoxide, potassium methoxide, $NaH_2PO_4$, or a combination comprising at least one of the foregoing.

The amount of alpha catalyst can vary widely according to the conditions of the melt polymerization, and can be about 0.001 to about 500 μmol. In an aspect, the amount of alpha catalyst can be about 0.01 to about 20 micromole (μmol), specifically about 0.1 to about 10 μmol, more specifically about 0.5 to about 9 μmol, and still more specifically about 1 to about 7 μmol, per mole of aliphatic diol and any other dihydroxy compound present in the melt polymerization.

In another aspect, a second transesterification catalyst, also referred to herein as a beta catalyst, can optionally be included in the melt polymerization process, provided that the inclusion of such a second transesterification catalyst does not significantly adversely affect the desirable properties of thepolycarbonate. Exemplary transesterification catalysts can further include a combination of a phase transfer catalyst of formula $(R^3)_4Q^+X$ above, wherein each $R^3$ is the same or different, and is a $C_{1-10}$ alkyl group; Q is a nitrogen or phosphorus atom; and X is a halogen atom or a $C_{1-8}$ alkoxy group or $C_{6-18}$ aryloxy group. Exemplary phase transfer catalyst salts include, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$, and $CH_3[CH_3(CH_2)_2]_3NX$, wherein X is $Cl^-$, $Br^-$, a $C_{1-8}$ alkoxy group or a $C_{6-18}$ aryloxy group. Examples of such transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing. Other melt transesterification catalysts include alkaline earth metal salts or alkali metal salts. In various aspects, where a beta catalyst is desired, the beta catalyst can be present in a molar ratio, relative to the alpha catalyst, of less than or equal to 10, specifically less than or equal to 5, more specifically less than or equal to 1, and still more specifically less than or equal to 0.5. In other aspects, the melt polymerization reaction disclosed herein uses only an alpha catalyst as described hereinabove, and is substantially free of any beta catalyst. As defined herein, "substantially free of" can mean where the beta catalyst has been excluded from the melt polymerization reaction. In one aspect, the beta catalyst is present in an amount of less than about 10 ppm, specifically less than 1 ppm, more specifically less than about 0.1 ppm, more specifically less than or equal to about 0.01 ppm, and more specifically less than or equal to about 0.001 ppm, based on the total weight of all components used in the melt polymerization reaction.

In one aspect, an end-capping agent (also referred to as a chain-stopper) can optionally be used to limit molecular weight growth rate, and so control molecular weight in the polycarbonate. Exemplary chain-stoppers include certain monophenolic compounds (i.e., phenyl compounds having a single free hydroxy group), monocarboxylic acid chlorides, and/or monochloroformates. Phenolic chain-stoppers are exemplified by phenol and $C_{1-}C_{22}$ alkyl-substituted phenols such as p-cumyl-phenol, resorcinol monobenzoate, and p- and tertiary-butyl phenol, cresol, and monoethers of diphenols, such as p-methoxyphenol. Alkyl-substituted phenols with branched chain alkyl substituents having 8 to 9 carbon atoms can be specifically mentioned.

In another aspect, endgroups can be derived from the carbonyl source (i.e., the diaryl carbonate), from selection of monomer ratios, incomplete polymerization, chain scission, and the like, as well as any added end-capping groups, and can include derivatizable functional groups such as hydroxy groups, carboxylic acid groups, or the like. In one aspect, the endgroup of a polycarbonate, including anpolycarbonate polymer as defined herein, can comprise a structural unit derived from a diaryl carbonate, where the structural unit can be an endgroup. In a further aspect, the endgroup is derived from an activated carbonate. Such endgroups can be derived from the transesterification reaction of the alkyl ester of an appropriately substituted activated carbonate, with a hydroxy group at the end of a polycarbonate polymer chain, under conditions in which the hydroxy group reacts with the ester carbonyl from the activated carbonate, instead of with the carbonate carbonyl of the activated carbonate. In this way, structural units derived from ester containing compounds or substructures derived from the activated carbonate and present in the melt polymerization reaction can form ester endgroups.

In one aspect, the melt polymerization reaction can be conducted by subjecting the reaction mixture to a series of temperature-pressure-time protocols. In some aspects, this involves gradually raising the reaction temperature in stages while gradually lowering the pressure in stages. In one aspect, the pressure is reduced from about atmospheric pressure at the start of the reaction to about 1 millibar (100 Pa) or lower, or in another aspect to 0.1 millibar (10 Pa) or lower in several steps as the reaction approaches completion. The temperature can be varied in a stepwise fashion beginning at a temperature of about the melting temperature of the reaction mixture and subsequently increased to final temperature. In one aspect, the reaction mixture is heated from room temperature to about 150 °C. In such an aspect, the polymerization reaction starts at a temperature of about 150 °C to about 220 °C. In another aspect, the polymerization temperature can be up to about 220 °C. In other aspects, the polymerization reaction can then be increased to about 250 °C and then optionally further increased to a temperature of about 320 °C, and all subranges there between. In one aspect, the total reaction time can be from about 30 minutes to about 200 minutes and all subranges there between. This procedure will generally ensure that the reactants react to give polycarbonates with the desired molecular weight, glass transition temperature and physical properties. The reaction proceeds to build the polycarbonate chain with production of ester-substituted alcohol by-product such as methyl salicylate. In one aspect, efficient removal of the by-product can be achieved by different techniques such as reducing the pressure. Generally the pressure starts relatively high in the beginning of the reaction and is lowered progressively throughout the reaction and temperature is raised throughout the reaction.

In one aspect, the progress of the reaction can be monitored by measuring the melt viscosity or the weight average molecular weight of the reaction mixture using techniques known in the art such as gel permeation chromatography. These properties can be measured by taking discrete samples or can be measured on-line. After the desired melt viscosity and/or molecular weight is reached, the final polycarbonate product can be isolated from the reactor in a solid or molten form. It will be appreciated by a person skilled in the art, that the method of making aliphatic homopolycarbonate and aliphatic-aromatic copolycarbonates as described in the preceding sections can be made in a batch or a continuous process and the process disclosed herein is preferably carried out in a solvent free mode. Reactors chosen should ideally be self-cleaning and should minimize any "hot spots." However, vented extruders similar to those that are commercially available can be used.

The compositions of the present invention can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230°C and about 350°C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Thermoplastic compositions comprising blended polycarbonate compositions can be manufactured by various methods. For example, powdered polycarbonate, other polymer (if present), and/or other optional components are first blended, optionally with fillers in a HENSCHEL-Mixer™ high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat and/or downstream through a sidestuffer. Additives can also be compounded into a masterbatch with a desired polymeric resin and fed into the extruder. The extruder is generally operated at a temperature higher than that necessary to cause the composition to flow. The extrudate is immediately quenched in a water bath and pelletized. The pellets, so prepared, when cutting the extrudate can be one-fourth inch long or less as desired. Such pellets can be used for subsequent molding, shaping, or forming.

In one aspect, the polycarbonate component of the thermoplastic composition comprises Bisphenol A residues. In a further aspect, the polycarbonate component of the thermoplastic composition is prepared by an interfacial polymerization process.

In reference to the weight average molecular weight ($M_w$) of the polycarbonate component, including the first and second polycarbonate components, of the present invention, it is understood that the $M_w$ is the absolute $M_w$ determined by gel permeation chromatography relative to traceable polycarbonate standards.

The polycarbonate component of the thermoplastic composition comprises a first polycarbonate component and a second polycarbonate component. The combined weight percent value of the first polycarbonate component and the second polycarbonate component is from about 40 wt% to about 90 wt%.

In one aspect, the first polycarbonate component is present in an amount from about 10 wt% to about 60 wt%. In a further aspect, the first polycarbonate component is present in an amount from about 10 wt% to about 50 wt%. In a yet further aspect, the first polycarbonate component is present in an amount from about 10 wt% to about 40 wt%. In an even further aspect, the first polycarbonate component is present in an amount from about 10 wt% to about 30 wt%. In a still further aspect, the first polycarbonate component is present in an amount from about 10 wt% to about 20 wt%.

In one aspect, the first polycarbonate component is present in an amount from about 20 wt% to about 70 wt%. In a further aspect, the first polycarbonate component is present in an amount from about 20 wt% to about 60 wt%. In a yet further aspect, the first polycarbonate component is present in an amount from about 20 wt% to about 50 wt%. In an even further aspect, the first polycarbonate component is present in an amount from about 20 wt% to about 40 wt%. In a still further aspect, the first polycarbonate component is present in an amount from about 20 wt% to about 30 wt%.

In one aspect, the first polycarbonate component is present in an amount from about 25 wt% to about 50 wt%. In a further aspect, the first polycarbonate component is present in an amount from about 25 wt% to about 45 wt%. In a yet further aspect, the first polycarbonate component is present in an amount from about 25 wt% to about 40 wt%. In an even further aspect, the first polycarbonate component is present in an amount from about 25 wt% to about 35 wt%. In a still further aspect, the first polycarbonate component is present in an amount from about 25 wt% to about 30 wt%.

In one aspect, the first polycarbonate polymer component is present in an amount of about 20 wt%. In another aspect, the first polycarbonate polymer component is present in an amount of about 22 wt%. In still another aspect, the first polycarbonate polymer component is present in an amount of about 23 wt%. In still another aspect, the first polycarbonate polymer component is present in an amount of about 24 wt%. In still another aspect, the first polycarbonate polymer component is present in an amount of about 25 wt%.

In one aspect, the first polycarbonate polymer component is a high flow polycarbonate. In another aspect, the first polycarbonate polymer component has a melt volume flow rate (MFR) of at least about 20 grams/10 minutes when measured at 300 °C and under a load of 1.2 kg according to ASTM D1238. still another aspect, the first polycarbonate polymer component has a melt volume flow rate (MFR) of at least about 22 grams/10 minutes when measured at 300 °C and under a load of 1.2 kg according to ASTM D1238. In still another aspect, the first polycarbonate polymer component has a melt volume flow rate (MFR) from about 17 grams/10 minutes to about 32 grams/10 minutes when measured at 300 °C and under a load of 1.2 kg according to ASTM D1238. In still another aspect, the first polycarbonate polymer component has a melt volume flow rate (MFR) from about 20 grams/10 minutes to about 30 grams/10 minutes when measured at 300 °C and under a load of 1.2 kg according to ASTM D1238. In still another aspect, the first polycarbonate polymer component has a melt volume flow rate (MFR) from about 22 grams/10 minutes to about 29 grams/10 minutes when measured at 300 °C and under a load of 1.2 kg according to ASTM D1238. In still another aspect, the first polycarbonate polymer component has a melt volume flow rate (MFR) from about 23 grams/10 minutes to about 29 grams/10 minutes when measured at 300 °C and under a load of 1.2 kg according to ASTM D1238.

In one aspect, the polycarbonate component of the thermoplastic composition has a weight average molecular weight of from about 15,000 g/mol to about 100,000 g/mol on an absolute polycarbonate molecular weight scale. In a still further aspect, the first polycarbonate component has a weight average molecular weight of from about 15,000 g/mol to about 50,000 g/mol on an absolute polycarbonate molecular weight scale. In a yet further aspect, the first polycarbonate component has a weight average molecular weight of from about 15,000 g/mol to about 45,000 g/mol on an absolute polycarbonate molecular weight scale. In an even further aspect, the first polycarbonate component has a weight average molecular weight of from about 15,000 g/mol to about 40,000 g/mol on an absolute polycarbonate molecular weight scale. In an even further aspect, the first polycarbonate component has a weight average molecular weight of from about 15,000 g/mol to about 35,000 g/mol on an absolute polycarbonate molecular weight scale. In an even further aspect, the first polycarbonate component has a weight average molecular weight of from about 15,000 g/mol to about 30,000 g/mol on an absolute polycarbonate molecular weight scale. In an even further aspect, the first polycarbonate component has a weight average molecular weight of from about 15,000 g/mol to about 25,000 g/mol on an absolute polycarbonate molecular weight scale.

In one aspect, the first polycarbonate component has a weight average molecular weight of from about 20,000 g/mol to about 100,000 g/mol on an absolute polycarbonate molecular weight scale. In a further aspect, the first polycarbonate component has a weight average molecular weight of from about 20,000 g/mol to about 50,000 g/mol on an absolute polycarbonate molecular weight scale. In a yet further aspect, the first polycarbonate component has a weight average molecular weight of from about 20,000 g/mol to about 45,000 g/mol on an absolute polycarbonate molecular weight scale. In an even further aspect, the first polycarbonate component has a weight average molecular weight of from about 20,000 g/mol to about 40,000 g/mol on an absolute polycarbonate molecular weight scale. In a still further aspect, the first polycarbonate component has a weight average molecular weight of from about 20,000 g/mol to about 35,000 g/mol on an absolute polycarbonate molecular weight scale. In a yet further aspect, the first polycarbonate component has a weight average molecular weight of from about 20,000 g/mol to about 30,000 g/mol on an absolute polycarbonate molecular weight scale. In an even further aspect, the first polycarbonate component has a weight average molecular weight of from about 20,000 g/mol to about 30,000 g/mol on an absolute polycarbonate molecular weight scale. In a still further aspect, the first polycarbonate component has a weight average molecular weight of from about 20,000 g/mol to about 29,000 g/mol on an absolute polycarbonate molecular weight scale.

In one aspect, the first polycarbonate component has a weight average molecular weight of from about 25,000 g/mol to about 100,000 g/mol on an absolute polycarbonate molecular weight scale. In a further aspect, the first polycarbonate component has a weight average molecular weight of from about 25,000 g/mol to about 50,000 g/mol on an absolute polycarbonate molecular weight scale. In a yet further aspect, the first polycarbonate component has a weight average molecular weight of from about 25,000 g/mol to about 45,000 g/mol on an absolute polycarbonate molecular weight scale. In an even further aspect, the first polycarbonate component has a weight average molecular weight of from about 25,000 g/mol to about 40,000 g/mol on an absolute polycarbonate molecular weight scale. In a still further aspect, the first polycarbonate component has a weight average molecular weight of from about 25,000 g/mol to about 35,000 g/mol on an absolute polycarbonate molecular weight scale. In a yet further aspect, the first polycarbonate component has a weight average molecular weight of from about 25,000 g/mol to about 30,000 g/mol on an absolute polycarbonate molecular weight scale. In an even further aspect, the first polycarbonate component has a weight average molecular weight of from about 25,000 g/mol to about 30,500 g/mol on an absolute polycarbonate molecular weight scale. In a still further aspect, the first polycarbonate component has a weight average molecular weight of from about 25,000 g/mol to about 30,000 g/mol on an absolute polycarbonate molecular weight scale. In a yet further aspect, the first polycarbonate component has a weight average molecular weight of from about 25,000 g/mol to about 29,000 g/mol on an absolute polycarbonate molecular weight scale.

In one aspect, the first polycarbonate component has a weight average molecular weight of from about 18,000 g/mol to about 35,000 g/mol on an absolute polycarbonate molecular weight scale. In a further aspect, the first polycarbonate component has a weight average molecular weight of from about 18,000 g/mol to about 30,000 g/mol on an absolute polycarbonate molecular weight scale. In an even further aspect, the first polycarbonate component has a weight average molecular weight of from about 18,000 g/mol to about 25,000 g/mol on an absolute polycarbonate molecular weight scale. In a still further aspect, the first polycarbonate component has a weight average molecular weight of from about 18,000 g/mol to about 23,000 g/mol on an absolute polycarbonate molecular weight scale.

In one aspect, the second polycarbonate component is present in an amount from about 20 wt% to about 50 wt%. In a further aspect, the second polycarbonate component is present in an amount from about 20 wt% to about 45 wt%. In a yet further aspect, the second polycarbonate component is present in an amount from about 20 wt% to about 40 wt%. In an even further aspect, the second polycarbonate component is present in an amount from about 20 wt% to about 35 wt%. In a still further aspect, the second polycarbonate component is present in an amount from about 20 wt% to about 30 wt%.

In one aspect, the second polycarbonate component is present in an amount from about 22 wt% to about 50 wt%. In a further aspect, the second polycarbonate component is present in an amount from about 22 wt% to about 45 wt%. In a yet further aspect, the second polycarbonate component is present in an amount from about 22 wt% to about 40 wt%. In an even further aspect, the second polycarbonate component is present in an amount from about 22 wt% to about 35 wt%. In a still further aspect, the second polycarbonate component is present in an amount from about 22 wt% to about 30 wt%.

In one aspect, the second polycarbonate component is present in an amount from about 25 wt% to about 50 wt%. In a further aspect, the second polycarbonate component is present in an amount from about 25 wt% to about 45 wt%. In a yet further aspect, the second polycarbonate component is present in an amount from about 25 wt% to about 40 wt%. In an even further aspect, the second polycarbonate component is present in an amount from about 25 wt% to about 35 wt%. In a still further aspect, the second polycarbonate component is present in an amount from about 25 wt% to about 30 wt%.

In one aspect, the second polycarbonate polymer component is present in an amount of about 25 wt%. In another aspect, the second polycarbonate polymer component is present in an amount of about 27 wt%. In still another aspect, the second polycarbonate polymer component is present in an amount of about 29 wt%. In still another aspect, the second polycarbonate polymer component is present in an amount of about 31 wt%. In still another aspect, the second polycarbonate polymer component is present in an amount of about 33 wt%. In still another aspect, the second polycarbonate polymer component is present in an amount of about 35 wt%. In still another aspect, the second polycarbonate polymer component is present in an amount of about 37 wt%. In still another aspect, the second polycarbonate polymer component is present in an amount of about 39 wt%. In still another aspect, the second polycarbonate polymer component is present in an amount of about 41 wt%. In still another aspect, the second polycarbonate polymer component is present in an amount of about 43 wt%. In still another aspect, the second polycarbonate polymer component is present in an amount of about 45 wt%. In still another aspect, the second polycarbonate polymer component is present in an amount of about 47 wt%. In still another aspect, the second polycarbonate polymer component is present in an amount of about 49 wt%.

In one aspect, the second polycarbonate polymer component is a low flow polycarbonate. In another aspect, the second polycarbonate polymer component has a melt volume flow rate (MFR) of at least about 3.0 grams/10 minutes when measured at 300 °C and under a load of 1.2 kg according to ASTM D1238. In still another aspect, the second polycarbonate polymer component has a melt volume flow rate (MFR) of at least about 4.0 grams/10 minutes when measured at 300 °C and under a load of 1.2 kg according to ASTM D1238. In still another aspect, the second polycarbonate polymer component has a melt volume flow rate (MFR) of at least about 4.5 grams/10 minutes when measured at 300 °C and under a load of 1.2 kg according to ASTM D1238. In still another aspect, the second polycarbonate polymer component has a melt volume flow rate (MFR) of at least about 5.0 grams/10 minutes when measured at 300 °C and under a load of 1.2 kg according to ASTM D1238. In still another aspect, the second polycarbonate polymer component has a melt volume flow rate (MFR) of at least about 5.1 grams/10 minutes when measured at 300 °C and under a load of 1.2 kg according to ASTM D1238. In still another aspect, the second polycarbonate polymer component has a melt volume flow rate (MFR) of at least about 5.2 grams/10 minutes when measured at 300 °C and under a load of 1.2 kg according to ASTM D1238. In still another aspect, the second polycarbonate polymer component has a melt volume flow rate (MFR) from about 4.0 grams/10 minutes to about 8.0 grams/10 minutes when measured at 300 °C and under a load of 1.2 kg according to ASTM D1238. In still another aspect, the second polycarbonate polymer component has a melt volume flow rate (MFR) from about 4.5 grams/10 minutes to about 7.2 grams/10 minutes when measured at 300 °C and under a load of 1.2 kg according to ASTM D1238. In still another aspect, the second polycarbonate polymer component has a melt volume flow rate (MFR) from about 4.8 grams/10 minutes to about 7.1 grams/10 minutes when measured at 300 °C and under a load of 1.2 kg according to ASTM D1238. In still another aspect, the second polycarbonate polymer component has a melt volume flow rate (MFR) from about 5.1 grams/10 minutes to about 6.9 grams/10 minutes

when measured at 300 °C and under a load of 1.2 kg according to ASTM D1238.

In one aspect, the second polycarbonate component has a weight average molecular weight of from about 15,000 g/mol to about 100,000 g/mol on an absolute polycarbonate molecular weight scale. In a further aspect, the second polycarbonate component has a weight average molecular weight of from about 15,000 g/mol to about 50,000 g/mol on an absolute polycarbonate molecular weight scale. In a yet further aspect, the second polycarbonate component has a weight average molecular weight of from about 15,000 g/mol to about 45,000 g/mol on an absolute polycarbonate molecular weight scale. In an even further aspect, the second polycarbonate component has a weight average molecular weight of from about 15,000 g/mol to about 40,000 g/mol on an absolute polycarbonate molecular weight scale. In a still further aspect, the second polycarbonate component has a weight average molecular weight of from about 15,000 g/mol to about 35,000 g/mol on an absolute polycarbonate molecular weight scale. In a yet further aspect, the second polycarbonate component has a weight average molecular weight of from about 15,000 g/mol to about 30,000 g/mol on an absolute polycarbonate molecular weight scale. In an even further aspect, the second polycarbonate component has a weight average molecular weight of from about 15,000 g/mol to about 25,000 g/mol on an absolute polycarbonate molecular weight scale.

In one aspect, the second polycarbonate component has a weight average molecular weight of from about 20,000 g/mol to about 100,000 g/mol on an absolute polycarbonate molecular weight scale. In a further aspect, the second polycarbonate component has a weight average molecular weight of from about 20,000 g/mol to about 50,000 g/mol on an absolute polycarbonate molecular weight scale. In a yet further aspect, the second polycarbonate component has a weight average molecular weight of from about 20,000 g/mol to about 45,000 g/mol on an absolute polycarbonate molecular weight scale. In an even further aspect, the second polycarbonate component has a weight average molecular weight of from about 20,000 g/mol to about 40,000 g/mol on an absolute polycarbonate molecular weight scale. In a still further aspect, the second polycarbonate component has a weight average molecular weight of from about 20,000 g/mol to about 35,000 g/mol on an absolute polycarbonate molecular weight scale. In a yet further aspect, the second polycarbonate component has a weight average molecular weight of from about 20,000 g/mol to about 30,000 g/mol on an absolute polycarbonate molecular weight scale. In an even further aspect, the second polycarbonate component has a weight average molecular weight of from about 20,000 g/mol to about 25,000 g/mol on an absolute polycarbonate molecular weight scale.

In one aspect, the second polycarbonate polymer component has a weight average molecular weight from about 18,000 to about 40,000 grams/mole. In another aspect, the second polycarbonate polymer component has a weight average molecular weight from about 20,000 to about 30,000 grams/mole. In still another aspect, the second polycarbonate polymer component has a weight average molecular weight from about 23,000 to about 30,000 grams/mole. In still another aspect, the second polycarbonate polymer component has a weight average molecular weight from about 25,000 to about 30,000 grams/mole. In still another aspect, the second polycarbonate polymer component has a weight average molecular weight from about 27,000 to about 30,000 grams/mole.

## POLY(ALKYLENE OXIDE) ADDITIVE COMPONENT

In one aspect, the disclosed thermoplastic compositions with superior properties of the present invention comprise poly(alkylene oxide) additives. In a further aspect, the disclosed thermoplastic compositions comprise one or more poly(alkylene oxide) additives. In a still further aspect, the disclosed thermoplastic compositions comprise at least one poly(alkylene oxide) additive. In a yet further aspect, the poly(alkylene oxide) additive component comprises poly(ethylene oxide) (PEO), or poly(propylene oxide) (PPO), or a combination thereof. In some aspects, the combination of poly(alkylene oxide) additives is chemical in nature, such as, for example, block copolymers. In other aspects, the combination of poly(alkylene oxide) additives can be physical in nature, such as for example, a mixture of homopolymers and/or copolymers.

In further aspects, the poly(alkylene oxide) component comprises a poly(ethylene oxide) (PEO) homopolymer or copolymer. In still further aspects, the poly(alkylene oxide) component comprises a poly(ethylene oxide)-poly(ethylene oxide) copolymer. In still further aspects, the poly(alkylene oxide) component comprises a block copolymer comprising at least one poly(ethylene oxide) block and at least one poly(propylene oxide) block.

In further aspects, the poly(alkylene oxide) component comprises a poly(ethylene oxide)-poly(propylene oxide) block copolymer. In even further aspects, the poly(ethylene oxide)-poly(ethylene oxide) block copolymer is a poly(ethylene oxide)-poly(propylene oxide)- poly(ethylene oxide) (PEO-PPO-PEO) tri-block copolymer. In still further aspects, the poly(ethylene oxide)-poly(ethylene oxide) block copolymer is a poly(propylene oxide)-poly(ethylene oxide)- poly(propylene oxide) (PPO-PEO-PPO) tri-block copolymer.

In further aspects, the poly(alkylene oxide) component comprises at least about 10 wt% poly(ethylene oxide). In still further aspects, the poly(alkylene oxide) component comprises at least about 30 wt% poly(ethylene oxide). In even further aspects, the poly(alkylene oxide) component comprises at least about 50 wt% poly(ethylene oxide). In yet further aspects, the poly(alkylene oxide) component comprises at least about 70 wt% poly(ethylene oxide). In still further

aspects, the poly(alkylene oxide) component comprises a poly(propylene oxide) (PPO) homopolymer.

In further aspects, the poly(alkylene oxide) component can comprise any desired form. In some aspects, the poly(alkylene oxide) component is in solid form. In other aspects, the poly(alkylene oxide) component is in liquid or paste form. In further aspects, the poly(alkylene oxide) component can be preheated to ease handling and enhance dispersion.

## IMPACT MODIFIER

In one aspect, the disclosed thermoplastic compositions with superior properties of the present invention comprise impact modifiers. In a further aspect, the disclosed thermoplastic compositions comprise one or more impact modifiers. In a still further aspect, the disclosed thermoplastic compositions comprise at least one impact modifier. In a yet further aspect, the disclosed thermoplastic compositions comprise two impact modifiers, that is, a first impact modifier component and a second impact modifier component.

In a further aspect, the impact modifiers of the present invention comprise a multi-phase system comprising at least two phases. In one aspect, a two phase system comprises a rubber substrate, with a superstrate (or graft) polymeric material attached to it. This phase is commonly referred to as the "rubber graft phase" because the superstrate is physically attached or grafted to the rubber through chemical reaction. A "rigid matrix phase" or continuous phase is also utilized, where the rubber graft phase (or dispersed phase) is dispersed throughout the matrix phase which forms the polymer continuum. The rubber interface is the surface forming the boundaries between the graft and matrix phases. In a further aspect, the grafted material acts as a compatibilizer between the rubber and the matrix phase at this interface and prevents the separation of these two otherwise immiscible phases. In some aspects, depending upon the type of impact modifier, some of the graft material may remain in free ungrafted form.

In a further aspect, the impact modifier of the present invention is selected from an acrylonitrile-butadiene-styrene polymer (ABS), a methyl methacrylate-acrylonitrile-butadiene-styrene (MABS) polymer, a methyl methacrylate-butadiene (MB) polymer, a methyl methacrylate-butadiene-styrene (MBS) polymer, and an acrylonitrile-styrene-acrylate (ASA) polymer. In a still further aspect, the impact modifier is an acrylonitrile-butadiene-styrene polymer ("ABS polymer").

In one aspect, acrylonitrile-butadiene-styrene ("ABS") graft copolymers contain two or more polymeric parts of different compositions, which are bonded chemically. The graft copolymer is specifically prepared by first polymerizing a conjugated diene, such as butadiene or another conjugated diene, with a monomer copolymerizable therewith, such as styrene, to provide a polymeric backbone. After formation of the polymeric backbone, at least one grafting monomer, and specifically two, are polymerized in the presence of the polymer backbone to obtain the graft copolymer. These resins are prepared by methods well known in the art.

For example, ABS can be made by one or more of emulsion or solution polymerization processes, bulk/mass, suspension and/or emulsion -suspension process routes. In addition, ABS materials can be produced by other process techniques such as batch, semi batch and continuous polymerization for reasons of either manufacturing economics or product performance or both. In order to reduce point defects or inclusions in the inner layer of the final multi-layer article, the ABS is produced by bulk polymerizatin.

Emulsion polymerization of vinyl monomers gives rise to a family of addition polymers. In many instances the vinyl emulsion polymers are copolymers containing both rubbery and rigid polymer units. Mixtures of emulsion resins, especially mixtures of rubber and rigid vinyl emulsion derived polymers are useful in blends.

Such rubber modified thermoplastic resins made by an emulsion polymerization process can comprise a discontinuous rubber phase dispersed in a continuous rigid thermoplastic phase, wherein at least a portion of the rigid thermoplastic phase is chemically grafted to the rubber phase. Such a rubbery emulsion polymerized resin can be further blended with a vinyl polymer made by an emulsion or bulk polymerized process. However, at least a portion of the vinyl polymer, rubber or rigid thermoplastic phase, blended with polycarbonate, will be made by emulsion polymerization.

Suitable rubbers for use in making a vinyl emulsion polymer blend are rubbery polymers having a glass transition temperature (Tg) of less than or equal to 25° C., more preferably less than or equal to 0° C., and even more preferably less than or equal to -30° C. As referred to herein, the Tg of a polymer is the Tg value of polymer as measured by differential scanning calorimetry (heating rate 20° C/minute, with the Tg value being determined at the inflection point). In another embodiment, the rubber comprises a linear polymer having structural units derived from one or more conjugated diene monomers. Suitable conjugated diene monomers include, e.g., 1,3-butadiene, isoprene, 1,3-heptadiene, methyl-1,3-pentadiene, 2,3-dimethylbutadiene, 2-ethyl-1,3-pentadiene, 1,3-hexadiene, 2,4-hexadiene, dichlorobutadiene, bromobutadiene and dibromobutadiene as well as mixtures of conjugated diene monomers. In a preferred embodiment, the conjugated diene monomer is 1,3-butadiene.

The emulsion polymer may, optionally, include structural units derived from one or more copolymerizable monoethylenically unsaturated monomers selected from ($C_2$-$C_{12}$) olefin monomers, vinyl aromatic monomers and monoethylenically unsaturated nitrile monomers, ($C_2$-$C_{12}$) alkyl (meth)acrylate, ($C_1$-$C_{12}$) alkyl acrylate, and ($C_1$-$C_{12}$) alkyl ($C_1$-$C_8$) alkylacrylate monomers, polyethylenically unsaturated monomers, and mixtures thereof.

As used herein, the term "($C_2$-$C_{12}$) olefin monomers" means a compound having from 2 to 12 carbon atoms

per molecule and having a single site of ethylenic unsaturation per molecule. Suitable ($C_2$-$C_{12}$) olefin monomers include, e.g., ethylene, propene, 1-butene, 1-pentene, heptene, 2-ethyl-hexylene, 2-ethyl-heptene, 1-octene, and 1-nonene.

As used herein, the term "monoethylenically unsaturated" means having a single site of ethylenic unsaturation per molecule, the term "(meth)acrylate monomers" refers collectively to acrylate monomers and methacrylate monomers, and the term "alkyl acrylate monomers" refers collectively to vinyl carboxylic acid ester acrylate monomers and alkylacrylate monomers and the terminology "(Cx-Cy)", as applied to a particular unit, such as, for example, a chemical compound or a chemical substituent group, means having a carbon atom content of from x carbon atoms to y carbon atoms per such unit, for example, "($C_1$-$C_{12}$)alkyl" means a straight or branched alkyl substituent group having from 1 to 12 carbon atoms per group and includes, e.g., methyl, ethyl, n-butyl, isobutyl, sec-butyl, t-butyl, n-propyl, isopropyl, pentyl, hexyl, heptyl, octyl, nonyl, decyl, undecyl and dodecyl.

The rubber phase and the rigid thermoplastic phase of the emulsion modified vinyl polymer may, optionally include structural units derived from one or more other copolymerizable monoethylenically unsaturated monomers such as, e.g., monoethylenically unsaturated carboxylic acids such as, e.g., acrylic acid, methacrylic acid, itaconic acid, hydroxy ($C_1$-$C_{12}$) alkyl (meth)acrylate monomers such as, e.g., hydroxyethyl methacrylate; ($C_5$-$C_{12}$) cycloalkyl (meth)acrylate monomers such as e.g., cyclohexyl methacrylate; (meth)acrylamide monomers such as e.g., acrylamide and methacrylamide; maleimide monomers such as, e.g., N-alkyl maleimides, N-aryl maleimides, maleic anhydride, vinyl esters such as, e.g., vinyl acetate and vinyl propionate. As used herein, the term "($C_5$-$C_{12}$) cycloalkyl" means a cyclic alkyl substituent group having from 5 to 12 carbon atoms per group and the term "(meth)acrylamide" refers collectively to acrylamides and methacrylamides.

In some cases the rubber phase of the emulsion polymer is derived from polymerization of a butadiene, $C_4$-$C_{12}$ acrylates or combination thereof with a rigid phase derived from polymerization of styrene, $C_1$-$C_3$ acrylates, methacrylates, acrylonitrile or combinations thereof where at least a portion of the rigid phase is grafted to the rubber phase. In other instances more than half of the rigid phase will be grafted to the rubber phase.

Suitable vinyl aromatic monomers include, e.g., styrene and substituted styrenes having one or more alkyl, alkoxyl, hydroxyl or halo substituent group attached to the aromatic ring, including, e.g., -methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, e.g., vinyl naphthalene, vinyl anthracene, as well as mixtures of vinyl aromatic monomers. As used herein, the term "monoethylenically unsaturated nitrile monomer" means an acyclic compound that includes a single nitrile group and a single site of ethylenic unsaturation per molecule and includes, e.g., acrylonitrile, methacrylonitrile, a-chloro acrylonitrile.

As used herein, the term "polyethylenically unsaturated" means having two or more sites of ethylenic unsaturation per molecule. In one aspect, a polyethylenically unsaturated monomer is used in the alkyl acrylate rubbers to provide "crosslinking" of the poly (alkyl acrylate) rubber particles formed in the process and to provide "graftlinking" sites in the poly (alkyl acrylate) rubber for subsequent reaction with grafting monomers. In further aspects, the polyethylenically unsaturated crosslinking monomers contain at least two ethylenically unsaturated sites per molecule that have a reactivity that is similar, under the polymerization conditions utilized, to that of the monoethylenically unsaturated alkyl acrylate monomer. In still further aspects, the graftlinking monomers include those monomers having at least one site of ethylenic unsaturation that have a reactivity that is similar, under the emulsion or other polymerization conditions used, to that of the alkyl acrylate monomer and at least one other site of ethylenic unsaturation having a reactivity that is substantially different, under the emulsion polymerization conditions used in the process of the present invention, from that of the monoethylenically unsaturated alkyl acrylate monomer, so that at least one unsaturated site per molecule of graftlinking monomer reacts during synthesis of the rubber latex and at least one other unsaturated site per molecule of graftlinking monomer remains unreacted following synthesis of the rubber latex and is thus remains available for subsequent reaction under different reaction conditions. Non-limiting examples of polyethylenically unsaturated monomers include butylene diacrylate, divinyl benzene, butene diol dimethacrylate, trimethylolpropane tri(meth)acrylate, allyl methacrylate, diallyl maleate, triallyl cyanurate and mixtures thereof. In one aspect, triallyl cyanurate is used as both a crosslinking monomer and a graftlinking monomer

In an alternative embodiment, the rubber is a copolymer, preferably a block copolymer, comprising structural units derived from one or more conjugated diene monomers and up to 90 percent by weight ("wt %") structural units derived from one or more monomers selected from vinyl aromatic monomers and monoethylenically unsaturated nitrile monomers, such as, a styrene-butadiene copolymer, an acrylonitrile-butadiene copolymer or a styrene-butadiene-acrylonitrile copolymer. In another embodiment, the rubber is a styrene-butadiene block copolymer that contains from 50 to 95 wt % structural units derived from butadiene and from 5 to 50 wt % structural units derived from styrene.

The emulsion derived polymers can be further blended with non- emulsion polymerized vinyl polymers, such as those made with bulk or mass polymerization techniques. A process to prepare mixtures containing polycarbonate, an emulsion derived vinyl polymer, along with a bulk polymerized vinyl polymers, is also contemplated.

The rubber phase can be made by aqueous emulsion polymerization in the presence of a radical initiator, a surfactant and, optionally, a chain transfer agent and coagulated to form particles of rubber phase material. Suitable

initiators include conventional free radical initiator such as, e.g., an organic peroxide compound, such as e.g., benzoyl peroxide, a persulfate compound, such as, e.g., potassium persulfate, an azonitrile compound such as, e.g., 2,2'-azobis-2,3,3-trimethylbutyronitrile, or a redox initiator system, such as, e.g., a combination of cumene hydroperoxide, ferrous sulfate, tetrasodium pyrophosphate and a reducing sugar or sodium formaldehyde sulfoxylate. Suitable chain transfer agents include, for example, a ($C_9$-$C_{13}$) alkyl mercaptan compound such as nonyl mercaptan, t-dodecyl mercaptan. Suitable emulsion aids include, linear or branched carboxylic acid salts, with about 10 to 30 carbon atoms. Suitable salts include ammonium carboxylates and alkaline carboxylates; such as ammonium stearate, methyl ammonium behenate, triethyl ammonium stearate, sodium stearate, sodium isostearate, potassium stearate, sodium salts of tallow fatty acids, sodium oleate, sodium palmitate, potassium linoleate, sodium laurate, potassium abieate (rosin acid salt), sodium abietate and combinations thereof. Often mixtures of fatty acid salts derived from natural sources such as seed oils or animal fat (such as tallow fatty acids) are used as emulsifiers.

In one aspect, the emulsion polymerized particles of rubber phase material have a weight average particle size of 50 to 800 nanometers ("nm"), more preferably, of from 100 to 500 nm, as measured by light transmission. The size of emulsion polymerized rubber particles can optionally be increased by mechanical, colloidal or chemical agglomeration of the emulsion polymerized particles, according to known techniques.

The rigid thermoplastic phase comprises one or more vinyl derived thermoplastic polymers and exhibits a Tg of greater than 25 °C., preferably greater than or equal to 90 °C. and even more preferably greater than or equal to 100 °C.

In various aspects, the rigid thermoplastic phase comprises a vinyl aromatic polymer having first structural units derived from one or more vinyl aromatic monomers, preferably styrene, and having second structural units derived from one or more monoethylenically unsaturated nitrile monomers, preferably acrylonitrile. In other cases, the rigid phase comprises from 55 to 99 wt %, still more preferably 60 to 90 wt %, structural units derived from styrene and from 1 to 45 wt %, still more preferably 10 to 40 wt %, structural units derived from acrylonitrile.

The amount of grafting that takes place between the rigid thermoplastic phase and the rubber phase can vary with the relative amount and composition of the rubber phase. In one embodiment, from 10 to 90 wt %, often from 25 to 60 wt %, of the rigid thermoplastic phase is chemically grafted to the rubber phase and from 10 to 90 wt %, preferably from 40 to 75 wt % of the rigid thermoplastic phase remains "free", i.e., non-grafted.

The rigid thermoplastic phase of the rubber modified thermoplastic resin can be formed solely by emulsion polymerization carried out in the presence of the rubber phase or by addition of one or more separately polymerized rigid thermoplastic polymers to a rigid thermoplastic polymer that has been polymerized in the presence of the rubber phase. In one embodiment, the weight average molecular weight of the one or more separately polymerized rigid thermoplastic polymers is from about 50,000 to about 250,000 g/mol.

In other cases, the rubber modified thermoplastic resin comprises a rubber phase having a polymer with structural units derived from one or more conjugated diene monomers, and, optionally, further comprising structural units derived from one or more monomers selected from vinyl aromatic monomers and monoethylenically unsaturated nitrile monomers, and the rigid thermoplastic phase comprises a polymer having structural units derived from one or more monomers selected from vinyl aromatic monomers and monoethylenically unsaturated nitrile monomers. In one embodiment, the rubber phase of the rubber modified thermoplastic resin comprises a polybutadiene or poly(styrene-butadiene) rubber and the rigid thermoplastic phase comprises a styrene-acrylonitrile copolymer. Vinyl polymers free of alkyl carbon-halogen linkages, specifically bromine and chlorine carbon bond linkages can provide melt stability.

In some aspects, the rubbers are cross-linked poly (alkyl acrylate) rubbers and poly (alkyl alkylacrylate) rubbers. In other aspects, the rubbers are poly (butyl acrylate), poly (ethyl acrylate) and poly (2-ethylhexyl acrylate) rubbers. In further aspects, the rubber is poly (butyl acrylate) rubber, particularly poly (n-butyl acrylate) rubber. In further aspects, in addition to or in place of the acrylate, styrene and acrylonitrile monomers used in the graft or matrix resins, monomers including vinyl carboxylic acids such as acrylic acid, methacrylic acid and itaconic acid, acrylamides such as acrylamide, methacrylamide and n-butyl acrylamide, alpha-, beta-unsaturated dicarboxylic anhydrides such as maleic anhydride and itaconic anhydride, imides of alpha-, beta-unsaturated dicarboxylic acids such as maleimide, N-methylmaleimide, N-ethylmaleimide, N-alkyl maleimide, N-aryl maleimide and the halo substituted N-alkyl N-aryl maleimides, imidized polymethyl methacrylates (polyglutarimides), unsaturated ketones such as vinyl methyl ketone and methyl isopropenyl ketone, alpha-olefins such as ethylene and propylene, vinyl esters such as vinyl acetate and vinyl stearate, vinyl and vinylidene halides such as the vinyl and vinylidene chlorides and bromides, vinyl-substituted condensed aromatic ring structures such as vinyl naphthalene and vinyl anthracene and pyridine monomers may be used, either alone or as a mixture of two or more kinds.

In some instances it is desirable to isolate the emulsion vinyl polymer or copolymer by coagulation in acid. In such instances the emulsion polymer can be contaminated by residual acid, or species derived from the action of such acid, for example carboxylic acids derived from fatty acid soaps used to form the emulsion. The acid used for coagulation can be a mineral acid; such as sulfuric acid, hydrochloric acid, nitric acid, phosphoric acid or mixtures thereof. In some cases the acid used for coagulation has a pH less than about 5.

Exemplary elastomer-modified graft copolymers include those formed from styrene-butadiene-styrene (SBS),

styrene-butadiene rubber (SBR), styrene-ethylene-butadiene-styrene (SEBS), ABS (acrylonitrile-butadiene-styrene), acrylonitrile-ethylenepropylene-diene-styrene (AES), styrene-isoprene-styrene (SIS), methyl methacrylate-butadiene-styrene (MBS), methyl methacrylate-butadiene (MB) and styrene-acrylonitrile (SAN).

In another aspect, acrylonitrile-styrene-acrylate (ASA) graft copolymers comprise a two phase system comprising an acrylate rubber substrate, for example poly(butyl acrylate) rubber, with a superstrate (or graft) copolymer of styrene-acrylonitrile (SAN) attached to it. In a further aspect, the rubber graft phase (or dispersed phase) is dispersed throughout the "rigid matrix phase" or continuous phase, which forms the polymer continuum. In one aspect, the matrix phase utilized is polymethyl methacrylate (PMMA) or methyl methacrylate-styrene-acrylonitrile (MMASAN), or a combination thereof.

In further aspects, ASA graft copolymers are graft copolymers of vinyl carboxylic acid ester monomers, vinyl aromatic monomers and vinyl cyanide monomers, including the group of polymers derived from vinyl carboxylic acid ester monomers, vinyl aromatic monomers and vinyl cyanide monomers. Examples of vinyl carboxylic acid ester monomers include butyl acrylate, methyl methacrylate, methyl acrylate, ethyl methacrylate, ethyl acrylate, butyl methacrylate, propyl methacrylate, propyl acrylate, hexyl methacrylate, 2-ethylhexyl acrylate, 2-ethylhexyl methacrylate, decyl methacrylate, methyl ethacrylate, butyl ethacrylate, cyclohexyl methacrylate, methoxyethyl acrylate, hydroxyethyl methacrylate and mixtures thereof. Examples of substituted vinyl aromatic monomers include styrene, 4-methyl-styrene, vinyl xylene, trimethyl-styrene, 3,5-diethyl-styrene, p-tert-butyl-styrene, 4-n-propyl-styrene, $\alpha$-methyl-styrene, $\alpha$-ethyl-styrene, $\alpha$-methyl-p-methyl-styrene, p-hydroxy-styrene, methoxy-styrenes, chloro-styrene, 2-methyl-4-chloro-styrene, bromo-styrene, $\alpha$-chloro-styrene, $\alpha$-bromo-styrene, dichloro-styrene, 2,6-dichloro-4-methyl-styrene, dibromo-styrene, tetrachloro-styrene and mixtures thereof

As used herein, the term "monomers" includes all of the polymerizable species of monomers and copolymers typically utilized in polymerization reactions, including, but not limited to homopolymers of primarily a single monomer, copolymers of two or more monomers, terpolymers of three monomers and physical mixtures thereof.

In a further aspect, various monomers may be further utilized in addition to or in place of those lsted above to further modify various properties of the compositions disclosed herein. In general, the components of the present invention may be compounded with a copolymerizable monomer or monomers within a range not damaging the objectives and advantages of this invention.

In a further aspect, the impact modifier component comprises one more of an acrylonitrile butadiene styrene ("ABS") copolymer, a methacrylate butadiene styrene ("MBS") copolymer, a methyl methacrylate butadiene ("MB") copolymer, a bulk polymerized ABS ("BABS") copolymer, and an acrylonitrile-styrene-acrylate ("ASA") copolymer. In a still further aspect, the impact modifier component comprises an acrylonitrile butadiene styrene ("ABS") copolymer. In a yet further aspect, the impact modifier component comprises a methyl methacrylate butadiene styrene ("MBS") copolymer. In an even further aspect, the impact modifier component comprises a bulk polymerized ABS ("BABS") copolymer. In a still further aspect, the impact modifier component comprises a methyl methacrylate butadiene ("MB") copolymer. In a yet further aspect, the impact modifier component comprises an acrylonitrile-styrene-acrylate (ASA) copolymer.

In a further aspect, the impact modifier component is present in an amount from about 2 wt% to about 10 wt%. In a still further aspect, the impact modifier component is present in an amount from about 4 wt% to about 8 wt%. In a yet further aspect, the impact modifier component is present in an amount from about 4 wt% to about 6 wt%. In an even further aspect, the impact modifier component is present in an amount from about 2 wt% to about 9 wt%. In a still further aspect, the impact modifier component is present in an amount from about 1 wt% to about 6 wt%. In a yet further aspect, the impact modifier component is present in an amount from about 2 wt% to about 5 wt%. In an even further aspect, the impact modifier component is present in an amount from about 2 wt% to about 4 wt%.

In a further aspect, the impact modifier component is present in an amount from about 2 wt% to about 50 wt%. In a still further aspect, the impact modifier component is present in an amount from about 2 wt% to about 45 wt%. In a yet further aspect, the impact modifier component is present in an amount from about 2 wt% to about 40 wt%. In an even further aspect, the impact modifier component is present in an amount from about 8 wt% to about 50 wt%. In a still further aspect, the impact modifier component is present in an amount from about 8 wt% to about 45 wt%. In a yet further aspect, the impact modifier component is present in an amount from about 8 wt% to about 40 wt%. In an even further aspect, the impact modifier component is present in an amount from about 8 wt% to about 35 wt%. In a still further aspect, the impact modifier component is present in an amount from about 2 wt% to about 20 wt%. In a yet further aspect, the impact modifier component is present in an amount from about 2 wt% to about 18 wt%. In an even further aspect, the impact modifier component is present in an amount from about 2 wt% to about 15 wt%.

In a further aspect, the impact modifier component is present in an amount from about 20 wt% to about 70 wt%. In a still further aspect, the impact modifier component is present in an amount from about 20 wt% to about 65 wt%. In a yet further aspect, the impact modifier component is present in an amount from about 20 wt% to about 60 wt%. In an even further aspect, the impact modifier component is present in an amount from about 25 wt% to about 65 wt%. In a still further aspect, the impact modifier component is present in an amount from about 25 wt% to about 55 wt%. In a yet further aspect, the impact modifier component is present in an amount from about 25 wt% to about 50

wt%. In an even further aspect, the impact modifier component is present in an amount from about 20 wt% to about 50 wt%.

**In** one aspect, the impact modifier component comprises a methacrylate-butadiene-styrene (MBS) polymer composition. In another aspect, the MBS polymer composition is present in an amount from about 2 wt% to about 10 wt%. In still another aspect, the MBS polymer composition is present in an amount from about 2 wt% to about 9 wt%. In still another aspect, the MBS polymer composition is present in an amount from about 2 wt% to about 8 wt%.

In one aspect, the MBS polymer composition is present in an amount from about 2 wt% to about 10 wt%. In another aspect, the MBS polymer composition is present in an amount from about 2 wt% to about 8 wt%. In still another aspect, the MBS polymer composition is present in an amount from about 2 wt% to about 6 wt%. In still another aspect, the MBS polymer composition is present in an amount from about 2 wt% to about 5 wt%. In still another aspect, the MBS polymer composition is present in an amount from about 2 wt% to about 4 wt%.

In one aspect, the MBS polymer composition comprises butadiene content from about 50 wt% to about 80 wt%. In another aspect, the MBS polymer composition comprises butadiene content from about 60 wt% to about 80 wt%. In still another aspect, the MBS polymer composition comprises butadiene content from about 70 wt% to about 80 wt%. In still another aspect, the MBS polymer composition comprises butadiene content from about 70 wt% to about 74 wt%. In still another aspect, the MBS polymer composition comprises butadiene content from about 70 wt% to about 75 wt%.

In one aspect, the MBS polymer composition has a bulk density from about 0.25 g/cm$^3$ to about 0.55 g/cm$^3$. In another aspect, the MBS polymer composition has a bulk density from about 0.30 g/cm$^3$ to about 0.50 g/cm$^3$. In still another aspect, the MBS polymer composition has a bulk density from about 0.35 g/cm$^3$ to about 0.49 g/cm$^3$. In still another aspect, the MBS polymer composition has a bulk density from about 0.35 g/cm$^3$ to about 0.50 g/cm$^3$.

In one aspect, the MBS polymer composition has a maximum mean particle diameter of about 250 μm. In another aspect, the MBS polymer composition has a maximum mean particle diameter of about 260 μm. In still another aspect, the MBS polymer composition has a maximum mean particle diameter of about 270 μm. In still another aspect, the MBS polymer composition has a maximum mean particle diameter of about 280 μm. In still another aspect, the MBS polymer composition has a maximum mean particle diameter of about 290 μm. In still another aspect, the MBS polymer composition has a maximum mean particle diameter of about 300 μm.

In one aspect, the MBS polymer composition has a maximum mean particle diameter from about 200 μm to about 300 μm. In another aspect, the MBS polymer composition has a maximum mean particle diameter from about 210 μm to about 290 μm. In still another aspect, the MBS polymer composition has a maximum mean particle diameter from about 220 μm to about 280 μm. In still another aspect, the MBS has a maximum mean particle diameter from about 230 μm to about 270 μm.

In one aspect, the impact modifier component comprises a methacrylate-butadiene (MB) polymer composition. In another aspect, the MB polymer composition is present in an amount from about 2 wt% to about 10 wt%. In still another aspect, the MB polymer composition is present in an amount from about 2 wt% to about 9 wt%. In still another aspect, the MB polymer composition is present in an amount from about 2 wt% to about 8 wt%.

In one aspect, the MB polymer composition is present in an amount from about 2 wt% to about 10 wt%. In another aspect, the MB polymer composition is present in an amount from about 2 wt% to about 8 wt%. In still another aspect, the MB polymer composition is present in an amount from about 2 wt% to about 6 wt%. In still another aspect, the MB polymer composition is present in an amount from about 2 wt% to about 5 wt%. In still another aspect, the MB polymer composition is present in an amount from about 2 wt% to about 4 wt%.

In one aspect, the MB polymer composition comprises butadiene content from about 50 wt% to about 80 wt%. In another aspect, the MB polymer composition comprises butadiene content from about 60 wt% to about 80 wt%. In still another aspect, the MB polymer composition comprises butadiene content from about 70 wt% to about 80 wt%. In still another aspect, the MB polymer composition comprises butadiene content from about 70 wt% to about 74 wt%. In still another aspect, the MB polymer composition comprises butadiene content from about 70 wt% to about 75 wt%.

In one aspect, the impact modifier comprises an acrylonitrile-butadiene-styrene (ABS) polymer composition. In another aspect, the ABS polymer composition is an emulsion polymerized ABS. In still another aspect, the ABS polymer composition is a bulk-polymerized ABS. In yet another aspect, the ABS polymer composition comprises grafted SAN and free SAN. In still another aspect, the ABS polymer composition is a SAN-grafted emulsion ABS.

In a further aspect, the ABS polymer composition is present in an amount from about 2 wt% to about 50 wt%. In a still further aspect, the ABS polymer composition is present in an amount from about 2 wt% to about 45 wt%. In a yet further aspect, the ABS polymer composition is present in an amount from about 2 wt% to about 40 wt%. In an even further aspect, the ABS polymer composition is present in an amount from about 8 wt% to about 50 wt%. In a still further aspect, the ABS polymer composition is present in an amount from about 8 wt% to about 45 wt%. In a yet further aspect, the ABS polymer composition is present in an amount from about 8 wt% to about 40 wt%. In an even further aspect, the ABS polymer composition is present in an amount from about 8 wt% to about 35 wt%. In a still further aspect, the ABS polymer composition is present in an amount from about 2 wt% to about 20 wt%. In a yet further aspect, the ABS polymer composition is present in an amount from about 2 wt% to about 18 wt%. In an even further aspect, the ABS polymer composition is present in an amount from about 2 wt% to about 15 wt%.

In one aspect, ABS polymer composition comprises butadiene content from about 20 wt% to about 75 wt%. In still another aspect, ABS polymer composition comprises butadiene content from about 30 wt% to about 65 wt%. In still another aspect, ABS polymer composition comprises butadiene content from about 40 wt% to about 55 wt%. In still another aspect, ABS polymer composition comprises butadiene content from about 10 wt% to about 25 wt%. In still another aspect, ABS polymer composition comprises acrylonitrile content from about 5 wt% to about 25 wt%. In still another aspect, ABS polymer composition comprises acrylonitrile content from about 7 wt% to about 17 wt%.

In one aspect, the impact modifier comprises an acrylonitrile-styrene-acrylate (ASA) polymer composition. In another aspect, the ASA polymer composition comprises a rigid matrix phase comprising a terpolymer derived from monomers selected from the group consisting of vinyl carboxylic acid ester monomers, vinyl aromatic monomers and unsaturated nitrile monomers. In another aspect, the mixture comprises polymethyl methacrylate (PMMA) homopolymer and methyl methacrylate-styrene-acrylonitrile (MMASAN) terpolymer.

In a further aspect, the ASA polymer composition is present in an amount from about 20 wt% to about 70 wt%. In a still further aspect, the ASA polymer composition is present in an amount from about 20 wt% to about 65 wt%. In a yet further aspect, the ASA polymer composition is present in an amount from about 25 wt% to about 70 wt%. In an even further aspect, the ASA polymer composition is present in an amount from about 25 wt% to about 65 wt%. In a still further aspect, the ASA polymer composition is present in an amount from about 25 wt% to about 60 wt%. In a yet further aspect, the ASA polymer composition is present in an amount from about 20 wt% to about 55 wt%. In an even further aspect, the ASA polymer composition is present in an amount from about 20 wt% to about 50 wt%.

In one aspect, the ASA polymer composition comprises about 10 percent to about 40 percent of poly (butyl acrylate) rubber. In another aspect, about 15 percent to about 30 percent. In yet another aspect, about 15 percent and 25 percent rubber.

In another aspect, the ASA polymer composition comprises a rubber graft phase comprising 20% poly (butyl acrylate) to about 70% poly (butyl acrylate). In another aspect, the rubber graft phase comprises about 45% poly (butyl acrylate) rubber and 55% SAN, with the SAN portion of the graft phase made from 65% styrene and 35% acrylonitrile to 75% styrene and 25% acrylonitrile. In yet another aspect, the SAN portion of the graft phase comprises about 70-75% styrene and about 25-30% acrylonitrile.

In one aspect, the ASA polymer composition comprises MMASAN comprising 80% MMA, 15% Styrene and 5% Acrylonitrile. In another aspect, the MMASAN comprises about 60% MMA, 30% Styrene and 10% Acrylonitrile. In yet another aspect, the MMASAN comprises about 45% methyl methacrylate, 40% styrene and 15% acrylonitrile. In still another aspect, the PMMA/MMASAN ratio in the matrix phase copolymer ranges from about 20/80 to about 80/20; and in another aspect, from 25/75 to about 75/25 including 50/50.

In another aspect, the ASA polymer composition comprises ratios of graft phase to matrix phase of from 15/85 to 75/25, and in another aspect, about 45% graft phase and 55% matrix phase. The graft copolymer phase may be coagulated, blended and colloided with the matrix phase homopolymers, copolymers and/or terpolymers by the various blending processes which are well known in the art to form the ASA polymer blend.

In one aspect, exemplary ASA polymer compositions include ASA GELOY resins (available from SABIC IP) and PARALOID EXL impact modifiers (available from DOW Chemical Co.).

In addition to the foregoing components, the impact modifier compositions can optionally comprise one or more additive materials. Combinations of additives can be used. Such additives can be mixed at a suitable time during the mixing of the components for forming the impact modifier composition. Exemplary and non-limiting examples of additive materials that can be present in the impact modifier compositions include processing agents, stabilizers, or neutralizers, or any combination thereof.

## MINERAL FILLERS

In various aspects, the thermoplastic compositions of the present invention comprise a filler. In a further aspect, the filler is a mineral filler. Mineral fillers are used in a variety of thermoplastics engineering to provide high performance properties, including improved impact properties while maintaining good ductility together with good flow. A variety of mineral fillers can be used in the disclosed thermoplastic compositions, including silicates such as mica, talc, clay, asbestos, feldspar, betonite, wollastonite, pyrophillite, and the like. In a further aspect, the mineral filler has a median particle size (i.e. $D_{50}$) of 15 microns or less, including a median particle size of 10 microns or less. In a still further aspect, the mineral filler is talc with a median particle size of from about 1 micron to about 5 microns. In an even further aspect, the mineral filler can have a topsize ($D_{90}$) of 15 microns or less, including 10 microns or less. In a still further aspect, the mineral filler is wollastonite.

In various aspects, the thermoplastic compositions of the present invention comprise a mineral filler component present in an amount from about 5 wt% to about 30 wt%. In a further aspect, the mineral filler component is present in an amount from about 5 wt% to about 28 wt%. In a still further aspect, the mineral filler component is present in an amount from about 5 wt% to about 26 wt%. In a yet further aspect, the mineral filler component is present in an amount

from about 5 wt% to about 26 wt%. In an even further aspect, the mineral filler component is present in an amount from about 5 wt% to about 24 wt%. In a still further aspect, the mineral filler component is present in an amount from about 5 wt% to about 22 wt%. In a yet further aspect, the mineral filler component is present in an amount from about 5 wt% to about 20 wt%. In an even further aspect, the mineral filler component is present in an amount from about 5 wt% to about 18 wt%. In a still further aspect, the mineral filler component is present in an amount from about 5 wt% to about 16 wt%. In an even further aspect, the mineral filler component is present in an amount from about 5 wt% to about 14 wt%. In a still further aspect, the mineral filler component is present in an amount from about 5 wt% to about 28 wt%. In a further aspect, the mineral filler component is present in an amount from about 5 wt% to about 10 wt%.

In a further aspect, the mineral filler component is present in an amount from about 10 wt% to about 28 wt%. In a still further aspect, the mineral filler component is present in an amount from about 10 wt% to about 26 wt%. In a yet further aspect, the mineral filler component is present in an amount from about 10 wt% to about 26 wt%. In an even further aspect, the mineral filler component is present in an amount from about 10 wt% to about 24 wt%. In a still further aspect, the mineral filler component is present in an amount from about 10 wt% to about 22 wt%. In a yet further aspect, the mineral filler component is present in an amount from about 10 wt% to about 20 wt%. In an even further aspect, the mineral filler component is present in an amount from about 10 wt% to about 18 wt%. In a still further aspect, the mineral filler component is present in an amount from about 10 wt% to about 16 wt%. In an even further aspect, the mineral filler component is present in an amount from about 10 wt% to about 14 wt%.

In a further aspect, the mineral filler component is present in an amount from about 12 wt% to about 28 wt%. In a still further aspect, the mineral filler component is present in an amount from about 12 wt% to about 26 wt%. In a yet further aspect, the mineral filler component is present in an amount from about 12 wt% to about 26 wt%. In an even further aspect, the mineral filler component is present in an amount from about 12 wt% to about 24 wt%. In a still further aspect, the mineral filler component is present in an amount from about 12 wt% to about 22 wt%. In a yet further aspect, the mineral filler component is present in an amount from about 12 wt% to about 20 wt%. In an even further aspect, the mineral filler component is present in an amount from about 12 wt% to about 18 wt%. In a still further aspect, the mineral filler component is present in an amount from about 12 wt% to about 16 wt%. In an even further aspect, the mineral filler component is present in an amount from about 12 wt% to about 14 wt%.

In a further aspect, the mineral filler component is present in an amount from about 15 wt% to about 28 wt%. In a still further aspect, the mineral filler component is present in an amount from about 15 wt% to about 26 wt%. In a yet further aspect, the mineral filler component is present in an amount from about 15 wt% to about 26 wt%. In an even further aspect, the mineral filler component is present in an amount from about 15 wt% to about 24 wt%. In a still further aspect, the mineral filler component is present in an amount from about 15 wt% to about 22 wt%. In a yet further aspect, the mineral filler component is present in an amount from about 15 wt% to about 20 wt%. In an even further aspect, the mineral filler component is present in an amount from about 15 wt% to about 18 wt%.

In various aspects, the thermoplastic compositions of the present invention comprise a talc component present in an amount from about 5 wt% to about 30 wt%. In a further aspect, the talc component is present in an amount from about 5 wt% to about 28 wt%. In a still further aspect, the talc component is present in an amount from about 5 wt% to about 26 wt%. In a yet further aspect, the talc component is present in an amount from about 5 wt% to about 26 wt%. In an even further aspect, the talc component is present in an amount from about 5 wt% to about 24 wt%. In a still further aspect, the talc component is present in an amount from about 5 wt% to about 22 wt%. In a yet further aspect, the talc component is present in an amount from about 5 wt% to about 20 wt%. In an even further aspect, the talc component is present in an amount from about 5 wt% to about 18 wt%. In a still further aspect, the talc component is present in an amount from about 5 wt% to about 16 wt%. In an even further aspect, the talc component is present in an amount from about 5 wt% to about 14 wt%. In a still further aspect, the talc component is present in an amount from about 5 wt% to about 28 wt%. In a further aspect, the talc component is present in an amount from about 5 wt% to about 10 wt%.

In a further aspect, the talc component is present in an amount from about 10 wt% to about 28 wt%. In a still further aspect, the talc component is present in an amount from about 10 wt% to about 26 wt%. In a yet further aspect, the talc component is present in an amount from about 10 wt% to about 26 wt%. In an even further aspect, the talc component is present in an amount from about 10 wt% to about 24 wt%. In a still further aspect, the talc component is present in an amount from about 10 wt% to about 22 wt%. In a yet further aspect, the talc component is present in an amount from about 10 wt% to about 20 wt%. In an even further aspect, the talc component is present in an amount from about 10 wt% to about 18 wt%. In a still further aspect, the talc component is present in an amount from about 10 wt% to about 16 wt%. In an even further aspect, the talc component is present in an amount from about 10 wt% to about 14 wt%.

In a further aspect, the talc component is present in an amount from about 12 wt% to about 28 wt%. In a still further aspect, the talc component is present in an amount from about 12 wt% to about 26 wt%. In a yet further aspect, the talc component is present in an amount from about 12 wt% to about 26 wt%. In an even further aspect, the talc component is present in an amount from about 12 wt% to about 24 wt%. In a still further aspect, the talc component is present in an amount from about 12 wt% to about 22 wt%. In a yet further aspect, the talc component is present in an amount from about 12 wt% to about 20 wt%. In an even further aspect, the talc component is present in an amount from

about 12 wt% to about 18 wt%. In a still further aspect, the talc component is present in an amount from about 12 wt% to about 16 wt%. In an even further aspect, the talc component is present in an amount from about 12 wt% to about 14 wt%.

In a further aspect, the talc component is present in an amount from about 15 wt% to about 28 wt%. In a still further aspect, the talc component is present in an amount from about 15 wt% to about 26 wt%. In a yet further aspect, the talc component is present in an amount from about 15 wt% to about 26 wt%. In an even further aspect, the talc component is present in an amount from about 15 wt% to about 24 wt%. In a still further aspect, the talc component is present in an amount from about 15 wt% to about 22 wt%. In a yet further aspect, the talc component is present in an amount from about 15 wt% to about 20 wt%. In an even further aspect, the talc component is present in an amount from about 15 wt% to about 18 wt%.

Talc is a hydrated magnesium silicate of the general chemical formula $Mg_8(OH)_4Si_8O_{20}$ or $3MgO{\cdot}SiO_2.H_2O$. Depending upon the deposit and processing used, other minerals can be present, e.g. chlorite, dolomite, and magnesite. Synthetic talcs have also been described and are known to one skilled in the art.

Various aspects of particle size and distribution are important in obtaining optimal performance, e.g. increased impact strength. In a further aspect, the talc filler is micronized. In a still further aspect, the talc filler has a mean particle size of about 0.2 to about 20 μm. In a yet further aspect, the talc filler has a mean particle size of about 0.2 to about 5 μm. In an even further aspect, the talc filler has a mean particle size of about 0.2 to about 3 μm. In a still further aspect, the talc filler has a mean particle size of about 0.2 to about 2 μm. In a yet further aspect, the talc filler has a mean particle size of less than about 2 μm. In an even further aspect, the talc filler has a mean particle size of less than about 1 μm. In a still further aspect, the talc filler has a mean particle size of about 2.0 μm. In a yet further aspect, the talc filler has a mean particle size of about 1.8 μm. In an even further aspect, the talc filler has a mean particle size of about 1.1 μm. In a still further aspect, the talc filler has a mean particle size of about 0.9 μm. In a yet further aspect, the talc filler has a mean particle size of about 0.8 μm.

In a further aspect, the talc filer is Jetfine 3CA (Imerys Talc, Inc.). In a still further aspect, the talc filer is Flex Talc 610 (KISH Talc).

In a further aspect, the mineral filler component comprises wollastonite. Wollastonites that may be used include both natural and synthetic wollastonite, in calcined or non-calcined state. Commercially available wollastonite is usually a mineral of natural calcium silicate ($CaSiO_3$) of acicular structure, with a theoretical composition of 46.5% CaO and 52.2% of $SiO_2$ by weight although impurities can be present. The wollastonite needle shaped particles can have an average length to diameter ratio less than or equal to 20, or, more specifically less than or equal to 15, or, more specifically less than or equal to 10, or more specifically less than or equal to 5, or more specifically less than or equal to 3. In some aspects, the average length to diameter ratio can be greater than or equal to 2.

In a further aspect, the wollastonite filler has a mean particle diameter of about 1 to about 20 μm. In a yet further aspect, the wollastonite filler has a mean particle diameter of about 1 to about 15 μm. In an even further aspect, the wollastonite filler has a mean particle diameter of about 1 to about 10 μm. In a still further aspect, the wollastonite filler has a mean particle diameter of about 1 to about 5 μm. In a yet further aspect, the wollastonite filler has a mean particle diameter of less than about 20 μm. In an even further aspect, the wollastonite filler has a mean particle diameter of less than about 10 μm. In a still further aspect, the wollastonite filler has a mean particle diameter of about 6 μm. In a yet further aspect, the wollastonite filler has a mean particle diameter of about 5 μm. In an even further aspect, the wollastonite filler has a mean particle diameter of about 4 μm. In a still further aspect, the wollastonite filler has a mean particle diameter of about 3 μm. In a yet further aspect, the wollastonite filler has a mean particle diameter of about 2 μm.

In various aspects, wollastonite filler can comprise any desired morphology. In some aspects, the wollastonite filler has an acicular (needle-like) morphology. In further aspects, the wollastonite filler is 800U (available from FIBERTEC).

"Median diameter $D_{50}$" is understood to mean a diameter such that 50% of the particles by weight have a size less than the said diameter; "Median diameter $D_{95}$" is understood to mean a diameter such that 95% of the particles by weight have a size less than the said diameter; and "Median diameter $D_{98}$" is understood to mean a diameter such that 98% of the particles by weight have a size less than the said diameter. For non-spherical particles, the size consists of the equivalent spherical diameter (Stocks diameter). All measurements of the diameters $D_{50}$, $D_{95}$, and $D_{98}$ can be carried out by means of a "Sedigraph" apparatus (trade name) by gravity sedimentation in accordance with standard AFNOR X11-683. "Specific surface area (BET)" is understood to mean the area of the surface of the particles of the powder with respect to unit mass, and can be determined according to the BET method by the quantity of argon adsorbed on the surface of the said particles so as to form a monomolecular layer completely covering the said surface (measurement according to the BET method, AFNOR standard X 11-621 and 622).

In various further aspects, the talc filler has a particle distribution $D_{50}$ of less than 10 micrometer (μm), less than 5 μm, less than 4 μm, less than 3 μm, less than 2 μm, less than 1.8 μm, less than 1.7 μm, less than 1.6 μm, less than 1.5 μm, less than 1.4 μm, less than 1.3 μm, less than 1.2 μm, less than 1.1 μm, less than 1.0 μm, less than 0.9 μm, and less than 0.8 μm. In a still further aspect, the talc filler has a medium diameter $D_{50}$ of the particles substantially between 1 and 3.5 μm. In a yet further aspect, the talc filler has a medium diameter $D_{50}$ of the particles substantially

between 0.5 and 2.5 μm.

## OTHER ADDITIVES FOR THERMOPLASTIC COMPOSITIONS

In some aspects, the disclosed thermoplastic compositions can comprise glass fibers. In further aspects, the glass fibers can be relatively short glass fibers, relatively long glass fibers, such as long glass fibers, or a combination of both short and long glass fibers. In one aspect, the glass fibers can be long glass fibers. In still further aspects, the term short glass fibers refers to a population of glass fibers having an average fiber length less than or equal to about 5 mm. In yet further aspects, the term long glass fibers refers to a population of glass fibers having an average fiber length greater than about 5 mm, including for example, a population of glass fibers having a fiber length in the range of from greater than 5 mm to 15 mm.

In further aspects, the glass fibers can also be characterized by the filament diameter. In still further aspects, suitable glass fibers can have any desired diameter. According to some aspects, it can be desirable however to minimize or reduce the glass fiber diameter as lower diameter glass fiber can result in improved impact properties. In still further aspects, the glass fiber can be characterized by an aspect ratio and cross-section. For example, glass fibers can have a relatively circular cross section. Alternatively, glass fibers can have a relatively flat or rectangular cross section.

In further aspects, the glass fiber have a median particle diameter (i.e. $D_{50}$) of 20 microns or less, including a median particle size of 15 microns or less. In still further aspects, the glass fibers have a median diameter $D_{50}$ of the fibers substantially between 0.2 and 20 μm. In a yet further aspect, the glass fiber have a median diameter $D_{50}$ of the fibers substantially between 2 and 20 μm.

In further aspects, the glass fiber is present in an amount ranging from 1 wt % to 30 wt % relative to the total weight of the composition, including exemplary values, 2 wt%, 3 wt%, 4 wt%, 5 wt %, 6 wt%, 7 wt%, 8 wt%, 9 wt%, 10 wt %, 11 wt %, 12 wt %, 13 wt %, 14 wt %, 15 wt %, 16 wt %, 17 wt %, 18 wt %, 19 wt %, 20 wt %, 21 wt %, 22 wt %, 23 wt %, 24 wt %, 25 wt %, 26 wt %, 27 wt %, 28 wt %, and 29 wt %. In still further aspects, the weight percentage can be in a range derived from any two of the above listed exemplary wt % values. For example, the reinforcement fiber component is present in an amount ranging from 2 to 30 wt % relative to the total weight of the composition.

In addition to the foregoing components, the disclosed thermoplastic compositions can optionally comprise a balance amount of one or more additive materials ordinarily incorporated in polycarbonate resin compositions of this type, with the proviso that the additives are selected so as to not significantly adversely affect the desired properties of the polycarbonate composition. Combinations of additives can be used. Such additives can be mixed at a suitable time during the mixing of the components for forming the composition. Exemplary and non-limiting examples of additive materials that can be present in the disclosed polycarbonate compositions include an antioxidant, a stabilizer (including for example a thermal stabilizer, a hydrolytic stabilizer, or a light stabilizer), UV absorbing additive, plasticizer, lubricant, mold release agent, acid scavenger, antistatic agent, colorant (e.g., pigment and/or dye), or any combination thereof.

In one aspect, the acid scavenger is selected from phosphorous acid, phosphoric acid, mono zinc phosphate, mono sodium phosphate, or sodium acid pyrophosphate.

In a further aspect, the disclosed polycarbonate blend compositions can further comprise a primary antioxidant or "stabilizer" (e.g., a hindered phenol) and, optionally, a secondary antioxidant (e.g., a phosphate and/or thioester). Suitable antioxidant additives include, for example, organic phosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants.

Antioxidants are generally used in amounts of about 0.01 wt% to about 1 wt%, optionally about 0.05 wt% to about 0.5 wt% of the polycarbonate blend composition. In one aspect, the primary antioxidant is present in an amount from about 0.1 wt% to about 1 wt%. In another aspect, the primary antioxidant is present in an amount from about 0.1 wt% to about 0.9 wt%. In still another aspect, the primary antioxidant is present in an amount from about 0.1 wt% to about 0.7 wt%. In still another aspect, the primary antioxidant is present in an amount from about 0.1 wt% to about 0.5 wt%. In still another aspect, the primary antioxidant is present in an amount from about 0.2 wt% to about 0.5 wt%. In still another aspect, the primary antioxidant is present in an amount from about 0.2 wt% to about 0.4 wt%.

In one aspect, the secondary antioxidant is present in an amount from about 0.01 wt% to about 1 wt%. In another aspect, the secondary antioxidant is present in an amount from about 0.05 wt% to about 0.8 wt%. In still another

aspect, the secondary antioxidant is present in an amount from about 0.05 wt% to about 0.6 wt%. In still another aspect, wherein the secondary antioxidant is present in an amount from about 0.05 wt% to about 0.4 wt%. In still another aspect, the secondary antioxidant is present in an amount from about 0.05 wt% to about 0.2 wt%.

In various aspects, the disclosed polycarbonate blend composition further comprises a hydrolytic stabilizer, wherein the hydrolytic stabilizer comprises a hydrotalcite and an inorganic buffer salt. In a further aspect, the disclosed polycarbonate blend composition comprises a hydrolytic stabilizer, wherein the hydrolytic stabilizer comprises one or more hydrotalcites and an inorganic buffer salt comprising one or more inorganic salts capable of pH buffering. Either synthetic hydrotalcites or natural hydrotalcites can be used as the hydrotalcite compound in the present invention. Exemplary hydrotalcites that are useful in the compositions of the present are commercially available and include, but are not limited to, magnesium hydrotalcites such as DHT-4C (available from Kyowa Chemical Co.); Hysafe 539 and Hysafe 530 (available from J.M. Huber Corporation).

In a further aspect, suitable thermal stabilizer additives include, for example, organic phosphites such as triphenyl phosphite, tris-(2,6-dimethylphenyl)phosphite, tris-(mixed mono-and di-nonylphenyl)phosphite or the like; phosphonates such as dimethylbenzene phosphonate or the like, organic phosphates such as trimethyl phosphate, thioesters such as pentaerythritol betalaurylthiopropionate, and the like, or combinations comprising at least one of the foregoing thermal stabilizers.

Thermal stabilizers are generally used in amounts of about 0.01wt% to about 5 wt%, optionally about 0.05 wt% to about 0.3 wt% of the polycarbonate blend composition. In one aspect, the thermal stabilizer is present in an amount from about 0.05 wt% to about 1.0 wt%. In another aspect, the thermal stabilizer is present in an amount from about 0.1 wt% to about 1.0 wt%. In still another aspect, the thermal stabilizer is present in an amount from about 0.1 wt% to about 0.9 wt%. In still another aspect, the thermal stabilizer is present in an amount from about 0.05 wt% to about 1.0 wt%. In still another aspect, the thermal stabilizer is present in an amount from about 0.1 wt% to about 0.8 wt%. In still another aspect, the thermal stabilizer is present in an amount from about 0.1 wt% to about 0.7 wt%. In still another aspect, the thermal stabilizer is present in an amount from about 0.1 wt% to about 0.6 wt%. In still another aspect, the thermal stabilizer is present in an amount from about 0.1 wt% to about 0.5 wt%. In still another aspect, the thermal stabilizer is present in an amount from about 0.1 wt% to about 0.4 wt%. In still another aspect, the thermal stabilizer is present in an amount from about 0.05 wt% to about 1.0 wt%.

In a further aspect, light stabilizers and/or ultraviolet light (UV) absorbing additives can also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and benzophenones such as 2-hydroxy-4-n-octoxy benzophenone, or the like, or combinations comprising at least one of the foregoing light stabilizers. Light stabilizers are generally used in amounts of about 0.01 wt% to about 10 wt%, optionally about 0.1 wt% to about 1 wt% of the polycarbonate blend composition.

In a further aspect, suitable UV absorbing additives include for example, hydroxybenzophenones; hydroxybenzotriazoles; hydroxybenzotriazines; cyanoacrylates; oxanilides; benzoxazinones; 2-(2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]-5-(octyloxy)-phenol (CYASORB™ 1164); 2,2'-(1,4-phenylene)bis(4H-3,1-benzoxazin-4-one) (CYASORB™ UV-3638); 1,3-bis[(2-cyano-3,3-diphenylacryloyl)oxy]-2,2-bis[[(2-cyano-3,3-diphenyl- acryloyl)oxy]methyl]propane (UVINUL™ 3030); 2,2'-(1,4-phenylene)bis(4H-3,1-benzoxazin-4-one); 1,3-bis[(2-cyano-3,3-diphenylacryloyl)oxy]-2,2-bis[[(2-cyano-3,3-diphenyl- acryloyl)oxy]methyl]propane; nano-size inorganic materials such as titanium oxide, cerium oxide, and zinc oxide, all with particle size less than about 100 nanometers; or the like, or combinations comprising at least one of the foregoing UV absorbers. UV absorbers are generally used in amounts of about 0.1 wt% to about 5 wt% of the polycarbonate blend composition.

In various aspects, plasticizers, lubricants, and/or mold release agents additives can also be used. There is a considerable overlap among these types of materials, which include, for example, di- or polyfunctional aromatic phosphates such as resorcinol tetraphenyl diphosphate (RDP), the bis(diphenyl)phosphate of hydroquinone and the bis(diphenyl)phosphate of bisphenol-A; poly-alpha-olefins; epoxidized soybean oil; silicones, including silicone oils; esters, for example, fatty acid esters such as medium and high molecular weight alkyl stearyl esters; mixtures of fatty acid esters and hydrophilic and hydrophobic nonionic surfactants comprising polyethylene glycol polymers, polypropylene glycol polymers, and copolymers thereof; waxes such as beeswax, montan wax, paraffin wax or the like.

Such materials are generally used in amounts of about 0.1 wt% to about 20 wt%, optionally about 1 wt% to about 10 wt% the polycarbonate blend composition. In one aspect, the mold release agent is methyl stearate; stearyl stearate or pentaerythritol tetrastearate. In another aspect, the mold release agent is pentaerythritol tetrastearate.

In one aspect, the mold release agent is present in an amount from about 0.1 wt% to about 1.0 wt%. In another aspect, the mold release agent is present in an amount from about 0.1 wt% to about 0.9 wt%. In still another aspect, the mold release agent is present in an amount from about 0.1 wt% to about 0.8 wt%. In still another aspect, the mold release agent is present in an amount from about 0.1 wt% to about 0.7 wt%. In still another aspect, the mold release agent is present in an amount from about 0.1 wt% to about 0.6 wt%. In still another aspect, the mold release agent is present in an amount from about 0.1 wt% to about 0.5 wt%.

In a further aspect, colorants such as pigment and/or dye additives can also be present. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates sulfates, chromates, or the like; carbon blacks; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, or combinations comprising at least one of the foregoing pigments. Pigments are generally used in amounts of about 0.01 wt% to about 10 wt%, the polycarbonate blend composition.

In one aspect, the pigment is selected from titanium dioxide, zinc sulfide, carbon black, cobalt chromate, cobalt titanate, cadmium sulfides, iron oxide, sodium aluminum sulfosilicate, sodium sulfosilicate, chrome antimony titanium rutile, nickel antimony titanium rutile, and zinc oxide. In another aspect, the pigment is carbon black.

In one aspect, the pigment is present in an amount from about 0.01 wt% to about 1 wt%. In another aspect, the pigment is present in an amount from about 0.1 wt% to about 0.9 wt%. In still another aspect, the pigment is present in an amount from about 0.2 wt% to about 0.8 wt%. In still another aspect, the pigment is present in an amount from about 0.2 wt% to about 0.7 wt%. In still another aspect, the pigment is present in an amount from about 0.3 wt% to about 0.6 wt%. In still another aspect, the pigment is present in an amount of about 0.5 wt%.

In a further aspect, suitable dyes are generally organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly ($C_{2-8}$) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3",5"-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or amounts of about 0.1 to about 10 ppm.

In a further aspect, the anti-drip agents can also be present. Exemplary anti-drip agents can include a fibril forming or non-fibril forming fluoropolymer such as polytetrafluoroethylene (PTFE). The anti-drip agent can optionally be encapsulated by a rigid copolymer, for example styrene-acrylonitrile (SAN). PTFE encapsulated in SAN is known as TSAN. Encapsulated fluoropolymers can be made by polymerizing the encapsulating polymer in the presence of the fluoropolymer, for example, in an aqueous dispersion. TSAN can provide significant advantages over PTFE, in that TSAN can be more readily dispersed in the composition. A suitable TSAN can comprise, for example, about 50 wt % PTFE and about 50 wt % SAN, based on the total weight of the encapsulated fluoropolymer. Alternatively, the fluoropolymer can be pre-blended in some manner with a second polymer, such as for, example, an aromatic polycarbonate resin or SAN to form an agglomerated material for use as an anti-drip agent. Either method can be used to produce an encapsulated fluoropolymer. In some aspects, PTFE can be used to enhance aesthetics of the compositions, such as surface properties, for example, for abrasion resistance and lubrication. In other aspects, PTFE is useful in improving flame retardant formulations, for example, by enhancing anti-drip properties.

In a further aspect, the thermoplastic compositions further comprise a flame retardant selected from a chlorine-containing hydrocarbon, a bromine-containing hydrocarbon, boron compound, a metal oxide, antimony oxide, aluminum hydroxide, a molybdenum compound, zinc oxide, magnesium oxide, an organic phosphate, phosphinate, phosphite, phosphonate, phosphene, halogenated phosphorus compound, inorganic phosphorus containing salt, and a nitrogen-containing compound, or a combination comprising at least one of the foregoing. In a still further aspect, the flame retardant is a phosphorus-containing flame retardant. In a yet further aspect, the phosphorus-containing flame retardant is selected from resorcinol bis(biphenyl phosphate), bisphenol A bis(diphenyl phosphate), and hydroquinone bis(diphenyl phosphate), or mixtures thereof.

In one aspect, the polycarbonate blends disclosed herein further comprise an aromatic vinyl copolymer. In another aspect, the aromatic vinyl copolymer is a styrene acrylonitrile copolymer (SAN). In further aspects, the aromatic

vinyl copolymer is alpha methyl styrene acrylonitrile copolymer (AMSAN), or methyl methacrylate styrene acrylonitrile copolymer (MMASAN), or a combination thereof.

In one aspect, the SAN comprises from about 10 wt% to about 40 wt% acrylonitrile. In another aspect, the SAN comprises from about 15 wt% to about 35 wt% acrylonitrile.

In one aspect, the SAN is a high flow SAN. In another aspect, the melt volume rate (MVR) is from about 4.0 gm/10 min to about 9 gm/10 min. In still another aspect, the melt volume rate (MVR) is from about 5.0 gm/10 min to about 8 gm/10 min. In still another aspect, the melt volume rate (MVR) is from about 5.2 gm/10 min to about 7.2 gm/10 min.

## METHODS OF IMPROVING PROPERTIES

In various aspects, an embodiment pertains to methods for improving flow properties of thermoplastic compositions, the method comprising the step of combining:

a) a thermoplastic polymer component comprising at least one polycarbonate;
b) an impact modifier component;
c) a mineral filler component; and
d) a poly(alkylene oxide) additive component;

wherein at 260 °C, the thermoplastic composition exhibits a greater melt volume rate (MVR) compared to an identical reference composition comprising the same thermoplastic component, the same weight percentage of the same impact modifier component, and the same weight percentage of the same mineral filler component, but in the absence of the poly(alkylene oxide) additive component.

In various further aspects, an embodiment pertains to methods for improving impact strength properties of thermoplastic compositions, the method comprising the step of combining:

a) a thermoplastic polymer component comprising at least one polycarbonate;
b) an impact modifier component;
c) a mineral filler component; and
d) a poly(alkylene oxide) additive component;

wherein a molded part formed from the thermoplastic composition exhibits a greater notched Izod impact strength compared to a molded part formed from an identical reference composition comprising the same thermoplastic component, the same weight percentage of the same impact modifier component, and the same weight percentage of the same mineral filler component, but in the absence of the poly(alkylene oxide) additive component.

In various further aspects, an embodiment pertains to methods for gloss properties of thermoplastic compositions, the method comprising the step of combining:

a) a thermoplastic polymer component comprising at least one polycarbonate;
b) an impact modifier component;
c) a mineral filler component; and
d) a poly(alkylene oxide) additive component;

wherein at 60 °, a molded part formed from the thermoplastic composition exhibits a greater gloss compared to a molded part formed from an identical reference composition comprising the same thermoplastic component, the same weight percentage of the same impact modifier component, and the same weight percentage of the same mineral filler component, but in the absence of the poly(alkylene oxide) additive component.

## MANUFACTURE OF THERMOPLASTIC COMPOSITIONS

In various aspects, the thermoplastic compositions of the present invention can be manufactured by various methods. The compositions of the present invention can be blended with the aforementioned ingredients by a variety of methods involving intimate mixing of the materials with any additional additives desired in the formulation. Because of the availability of melt blending equipment in commercial polymer processing facilities, melt processing methods can be used. In various further aspects, the equipment used in such melt processing methods includes, but is not limited to, the following: co-rotating and counterrotating extruders, single screw extruders, co-kneaders, disc-pack processors and various other types of extrusion equipment. In a further aspect, the extruder is a twin-screw extruder. In various further aspects, the melt processed composition exits processing equipment such as an extruder through small exit holes in a die. The resulting strands of molten resin are cooled by passing the strands through a water bath. The cooled strands

can be chopped into small pellets for packaging and further handling.

The temperature of the melt is minimized in order to avoid excessive degradation of the resins. For example, it can be desirable to maintain the melt temperature between about 230°C and about 350°C in the molten resin composition, although higher temperatures can be used provided that the residence time of the resin in the processing equipment is kept short. In a still further aspect, the extruder is typically operated at a temperature of about 180 °C to about 385 °C. In a yet further aspect, the extruder is typically operated at a temperature of about 200 °C to about 330 °C. In an even further aspect, the extruder is typically operated at a temperature of about 220 °C to about 300 °C.

In various aspects, the thermoplastic compositions of the present invention can be prepared by blending the polycarbonate, impact modifier, poly(alkylene ester), and filler components in mixer, e.g. a HENSCHEL-Mixer® high speed mixer or other suitable mixer/blender. Other low shear processes, including but not limited to hand mixing, can also accomplish this blending. The mixture can then be fed into the throat of a twin-screw extruder via a hopper. Alternatively, at least one of the components can be incorporated into the composition by feeding directly into the extruder at the throat and/or downstream through a sidestuffer. Additives can also be compounded into a masterbatch desired polymeric resin and fed into the extruder. The extruder generally operated at a temperature higher than that necessary to cause the composition to flow. The extrudate is immediately quenched in a water bath and pelletized. The pellets, so prepared, when cutting the extrudate can be one-fourth inch long or less as desired. Such pellets can be used for subsequent molding, shaping, or forming.

## ARTICLES OF MANUFACTURE

In various aspects, the disclosed thermoplastic compositions with flow and impact properties of the present invention can be used in making articles. The disclosed thermoplastic compositions can be formed into useful shaped articles by a variety of means such as; injection molding, extrusion, rotational molding, compression molding, blow molding, sheet or film extrusion , profile extrusion, gas assist molding, structural foam molding and thermoforming. The thermoplastic compositions described herein resins can also be made into film and sheet as well as components of laminate systems. In a further aspect, in an embodiment, a method of manufacturing an article comprises melt blending the polycarbonate polymer composition, the impact modifier composition, and the SAN copolymer components; and molding the extruded composition into an article. In a still further aspect, the extruding is done with a twin-screw extruder.

In various aspects, the invention pertains to articles comprising the disclosed compositions. In a still further aspect, the article is used in automotive applications. In a yet further aspect, the article is used in medical applications. In an even further aspect, the article is selected from vehicle body panel, a vehicle interior panel, a vehicle instrument panel, a spoiler, a fairing, a vehicle interior trim part, a grill, a seat back, a piece of furniture, an office partition, a surfboard, a surgical cart, a tool or equipment housing, a medical device, or a toy.

Formed articles include, for example, computer and business machine housings, home appliances, trays, plates, handles, helmets, automotive parts such as instrument panels, cup holders, glove boxes, interior coverings and the like. In various further aspects, formed articles include, but are not limited to, food service items, medical devices, animal cages, electrical connectors, enclosures for electrical equipment, electric motor parts, power distribution equipment, communication equipment, computers and the like, including devices that have molded in snap fit connectors. In a further aspect, articles of the present invention comprise exterior body panels and parts for outdoor vehicles and devices including automobiles, protected graphics such as signs, outdoor enclosures such as telecommunication and electrical connection boxes, and construction applications such as roof sections, wall panels and glazing. Multilayer articles made of the disclosed polycarbonates particularly include articles which will be exposed to UV-light, whether natural or artificial, during their lifetimes, and most particularly outdoor articles; i.e., those intended for outdoor use. Suitable articles are exemplified by enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal watercraft; jet-skis; pools; spas; hot-tubs; steps; step coverings; building and construction applications such as glazing, roofs, windows, floors, decorative window furnishings or treatments; treated glass covers for pictures, paintings, posters, and like display items; wall panels, and doors; protected graphics; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; articles made from plastic-wood combinations; golf course markers; utility pit covers; computer housings; desk-top computer housings; portable computer housings; lap-top computer housings; palm-held computer housings; monitor housings; printer housings; keyboards; facsimile machine housings; copier housings; telephone housings; mobile phone housings; radio sender housings; radio receiver housings; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective

equipment; coated synthetic or natural textiles; coated photographic film and photographic prints; coated painted articles; coated dyed articles; coated fluorescent articles; coated foam articles; and like applications.

In one aspect, the present invention pertains to articles comprising the disclosed thermoplastic compositions. In a further aspect, the article comprising the disclosed thermoplastic compositions is used in automotive applications. In a yet further aspect, the article used in automotive applications is selected from instrument panels, overhead consoles, interior trim, center consoles, panels, quarter panels, rocker panels, trim, fenders, doors, deck lids, trunk lids, hoods, bonnets, roofs, bumpers, fascia, grilles, minor housings, pillar appliques, cladding, body side moldings, wheel covers, hubcaps, door handles, spoilers, window frames, headlamp bezels, headlamps, tail lamps, tail lamp housings, tail lamp bezels, license plate enclosures, roof racks, and running boards. In an even further aspect, the article comprising the disclosed thermoplastic compositions is selected from mobile device exteriors, mobile device covers, enclosures for electrical and electronic assemblies, protective headgear, buffer edging for furniture and joinery panels, luggage and protective carrying cases, small kitchen appliances, and toys.

In one aspect, the present invention pertains to electrical or electronic devices comprising the disclosed thermoplastic compositions. In a further aspect, the electrical or electronic device comprising the disclosed thermoplastic compositions is a cellphone, a MP3 player, a computer, a laptop, a camera, a video recorder, an electronic tablet, a pager, a hand receiver, a video game, a calculator, a wireless car entry device, an automotive part, a filter housing, a luggage cart, an office chair, a kitchen appliance, an electrical housing, an electrical connector, a lighting fixture, a light emitting diode, an electrical part, or a telecommunications part.

## ASPECTS

In various aspects, the present invention pertains to and includes at least the following aspects.

Without further elaboration, it is believed that one skilled in the art can, using the description herein, utilize the present invention. The following examples are included to provide addition guidance to those skilled in the art of practicing the claimed invention. The examples provided are merely representative of the work and contribute to the teaching of the present invention. Accordingly, these examples are not intended to limit the invention in any manner.

Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The materials shown in Table 1 were used to prepare the compositions described herein.

**Table 1.**

| Identifier | Description | Source |
|---|---|---|
| PC1 | BPA polycarbonate resin made by an interfacial process with a weight average molecular weight of about 22,000 on an absolute PC molecular weight scale | SABIC I.P. |
| PC2 | BPA polycarbonate resin made by an interfacial process with a weight average molecular weight of about 30,000 on an absolute PC molecular weight scale | SABIC I.P. |
| PEO1 | Adekanol F88, tri-block copolymer of polyethylene oxide-polypropylene oxide-polyethylene oxide (PEO-PPO-PEO) | Adeka Corporation |

(continued)

| Identifier | Description | Source |
|---|---|---|
| PEO2 | Pluronic F88, tri-block copolymer of polyethylene oxide-polypropylene oxide-polyethylene oxide (PEO-PPO-PEO) | BASF |
| PEO3 | Pluronic F108, tri-block copolymer of polyethylene oxide-polypropylene oxide-polyethylene oxide (PEO-PPO-PEO) | BASF |
| PEO4 | Pluronic F127, tri-block copolymer of polyethylene oxide-polypropylene oxide-polyethylene oxide (PEO-PPO-PEO) | BASF |
| PEO5 | POLYOX WSR N10 provided by Dow Chemicals. Contains greater than or equal to 95% of a high molecular weight PEO (100 kg/mol), less than or equal to 3 % fumed silica (generic) and less than or equal to 1 % calcium as mixed salts | DOW Chemical Co. |
| IM1 | Methyl methacrylate-butadiene (MBS) core-shell type impact modifier made by Dow Chemical Co. and sold under the trade name EXL2691A (powder form) and EXL3691A (pellet form). | DOW Chemical Co. |
| SAN | Styrene-Acrylonitrile copolymer with acrylonitrile = 25 mole percent and Mw = 77,000 g/mol, PDI ~ 2.1 | SABIC I.P. |
| FIL1 | Fine Talc from Luzenac America product no. Jetfine 3CA | Luzenac America |
| FIL2 | Wollastonite powder was provided by Fibertec, product number 800U | Fibertec |
| ADD1 | Octadecyl3 (3,5 ditertbutyl4hydroxyphenyl)propionate - Hindered phenol antioxidant sold under the trade name: Irganox 1076 by Ciba Specialty Chemicals Corporation | Ciba Specialty Chemicals |
| ADD2 | Pentaerythritol tetrastearate; commercially available from Faci as PETS G | Faci S.p.A.. |
| ADD3 | Pentaerythrithol tetrakis-(3-dodecylthiopropionate), sold under the tradename SEENOX 412S by Shipro Kasei Kaisha | Ciba Specialty Chemicals Corporation |
| ADD4 | Tris(2,4-di-t-butylphenyl)phosphite - Phosphite stabilizer from Everspring Chemical Company, Ltd. | Everspring Chemical Company, Ltd. |
| ADD5 | Mono zinc phosphate from Budenheim USA product no. Z21-82 from Gallard Schlesinger Industries | Gallard Schlesinger Industries |
| COL1 | Carbon black pigment, medium color powder; sold under the tradename: Monarch 800 by Cabot Corporation | Cabot Corporation |
| COL2 | Carbon black-polycarbonate masterbatch with 25% carbon black. The carbon black used is sold under trade name Black Peals 800 by Cabot Corporation. The polycarbonate used is PC2 described above. | SABIC IP |

In each of the examples, sample batches (10 to 15 kg) were prepared by pre-blending all constituents in a dry-blend and tumble mixing for 20 minutes. The pre-blend was fed directly to a co-rotation twin screw extruder (27 mm) at a nominal melt temperature of 260 °C, (700 mm) of mercury vacuum, and 300 rpm. The extrudate was pelletized and dried at about 100° C. for about 4 hours. To make test specimens, the dried pellets were injection molded to form appropriate test samples. Typical extrusion processing conditions are listed in Table 2. Typical molding conditions are listed in Table 3.

**Table 2.**

| Parameter | Unit | Setting |
|---|---|---|
| Barrel 1 temperature | °F | Not heated |
| Barrel 2 temperature | °F | 325-425 |
| Barrel 3 temperature | °F | 400-500 |
| Barrel 4 temperature | °F | 450-575 |
| Barrel 5 temperature | °F | 450-575 |
| Barrel 6 temperature | °F | 450-575 |
| Barrel 7 temperature | °F | 450-575 |

(continued)

| Parameter | Unit | Setting |
|---|---|---|
| Barrel 9 temperature | °F | 450-575 |
| Barrel 9 temperature | °F | 450-575 |
| Die head | °F | 450-575 |
| Screw speed | RPM | 300-500 |
| Torque | % | 50-90 |
| Throughput | lb/h | 50-100 |

**Table 3.**

| Parameter | Unit | Set Value |
|---|---|---|
| Drying temperature | °F | 180-280 |
| Drying time | hours | 3 to 5 |
| Melt temperature | °F | 480-580 |
| Nozzle temperature | °F | 480-580 |
| Mold Temperature | °C | 60-200 |
| Back pressure | PSI | 50-100 |
| Screw speed | RPM | 40-100 |

NII ductility is reported as the percentage of ten samples which, upon failure in the notched Izod impact test, exhibited a ductile failure rather than rigid failure, the latter being characterized by cracking and the formation of shards.

Melt Volume Rate ("MVR") was determined at 265 °C under a 5.0 kg load, over 10 minutes, in accordance with ISO 1133 or ASTM D1238 (as indicated in the tables below). Each reported value is an average value of 3 tested specimens. Results are reported in $cm^3$ per 10 minutes.

Heat deflection temperature ("HDT") was measured in accordance with the ASTM D 648 standard using 3.2 mm bars in a flatwise manner under a load of 1.8 MPa.

Notched Izod impact Strength ("NII") was used to compare the impact resistances of plastic materials and was determined in accordance with ISO 180 at the indicated temperatures with a 5.5 Joule hammer using 4 mm thick notched Izod bars. The ISO results are defined as the impact energy in joules used to break the test specimen, divided by the specimen area at the notch. Results are reported in $kJ/m^2$. Results are reported in $kJ/m^2$.

Multi-Axial Impact (indicated as "MAI" in tables below) was measured according to ASTM D3763 at 23 °C and 0 °C using a plaque 3.2 mm thick, 10 centimeters diameter, with a dart diameter of 12.5 mm at 2.3 m/s. The results represent the total energy absorbed and are reported in Joules. This procedure provides information on how a material behaves under multiaxial deformation conditions. The final test result is calculated as the average of the test results of either five or ten test plaques. Results are reported in Joules.

Tensile modulus and strength (indicated as "TM" and "TS" in tables below) is reported as MPa which was determined according to ISO 527 in uniaxial tensile manner at 23 °C using standard specimens (150 mm long, with the center section 10 mm wide by 4 mm thick by 80 mm long). From the stress vs. strain plot, the TM and TS can be estimated. TM is the slope of the stress vs. strain plot and TS is the first stress point at which an increase in the strain does not cause an increase in the stress.

Exemplary PC/ABS compositions of the present invention (E2 through E9), along with a control or comparator composition (C1) are shown in Table 4.

**Table 4.**

| No. | Item | C1 | E2 | E3 | E4 | E5 |
|---|---|---|---|---|---|---|
| 1 | PC2 | 45.6 | 45.35 | 44.85 | 45.35 | 44.85 |
| 2 | PC1 | 22.45 | 22.45 | 22.45 | 22.45 | 22.45 |
| 3 | SAN | 9.5 | 9.5 | 9.5 | 9.5 | 9.5 |
| 4 | IM1 | 4.4 | 4.4 | 4.4 | 4.4 | 4.4 |
| 5 | Talc | 15 | 15 | 15 | 15 | 15 |
| 6 | PEO2 | | 0.25 | 0.75 | | |
| 7 | PEO3 | | | | 0.25 | 0.75 |
| 8 | PEO4 | | | | | |
| 9 | PEO5 | | | | | |
| 10 | ADD1 | 0.25 | 0.25 | 0.25 | 0.25 | 0.25 |
| 11 | ADD2 | 0.25 | 0.25 | 0.25 | 0.25 | 0.25 |
| 12 | ADD3 | 0.25 | 0.25 | 0.25 | 0.25 | 0.25 |
| 13 | ADD4 | 0.1 | 0.1 | 0.1 | 0.1 | 0.1 |
| 14 | ADD5 | 0.2 | 0.2 | 0.2 | 0.2 | 0.2 |
| 15 | COL2 | 2 | 2 | 2 | 2 | 2 |
| **Total** | | **100** | **100** | **100** | **100** | **100** |

**Table 4. (cont.)**

| No. | Item | C1 | E6 | E7 | E8 | E9 |
|---|---|---|---|---|---|---|
| 1 | PC2 | 45.6 | 45.35 | 44.85 | 45.35 | 44.85 |
| 2 | PC1 | 22.45 | 22.45 | 22.45 | 22.45 | 22.45 |
| 3 | SAN | 9.5 | 9.5 | 9.5 | 9.5 | 9.5 |
| 4 | IM1 | 4.4 | 4.4 | 4.4 | 4.4 | 4.4 |
| 5 | Talc | 15 | 15 | 15 | 15 | 15 |
| 6 | PEO2 | | | | | |
| 7 | PEO3 | | | | | |
| 8 | PEO4 | | 0.25 | 0.75 | | |
| 9 | PEO5 | | | | 0.25 | 0.75 |
| 10 | ADD1 | 0.25 | 0.25 | 0.25 | 0.25 | 0.25 |
| 11 | ADD2 | 0.25 | 0.25 | 0.25 | 0.25 | 0.25 |
| 12 | ADD3 | 0.25 | 0.25 | 0.25 | 0.25 | 0.25 |
| 13 | ADD4 | 0.1 | 0.1 | 0.1 | 0.1 | 0.1 |
| 14 | ADD5 | 0.2 | 0.2 | 0.2 | 0.2 | 0.2 |
| 15 | COL2 | 2 | 2 | 2 | 2 | 2 |
| **Total** | | **100** | **100** | **100** | **100** | **100** |

As shown in Table 4, the mineral filled PC/ABS formulations evaluated with a talc loading of 15%. The inventive formulations contain up to 0.75 % of the PEO based additives. Performance properties for the compositions described in Table 4 are listed in Table 5.

**Table 5.**

| Test | Test Condition | Unit | C1 | E2 | E3 | E4 | E5 |
|---|---|---|---|---|---|---|---|
| MVR | 260 °C, 5 kg/360s | $cm^3$/10 min | 9.63 | 12 | 12.9 | 11.5 | 12.8 |
| MVR | 260 °C, 5 kg/1080s | $cm^3$/10 min | 10.3 | 12.1 | 15.1 | 11.7 | 13.5 |
| HDT | 1.8 MPa/3.2 mm | °C | 125.7 | 124.1 | 120.1 | 123.8 | 119.2 |
| NII | 23 °C/5.5 J | $kJ/m^2$ | 12 | 18 | 28 | 23 | 24 |
| NII | 0 °C/5.5 J | $kJ/m^2$ | 7.9 | 9.6 | 13.2 | 10.7 | 11.1 |
| MAI | 23 °C/2.3m/s/3.2mm | J | 55 | 56 | 55 | 54 | 56 |
| MAI | 0 °C/2.3m/s/3.2mm | J | 41 | 51 | 52 | 51 | 52 |
| TM | 5 mm/min / 23 °C | MPa | 4234 | 4148 | 4162 | 4138 | 4160 |
| TS | 5 mm/min / 23 °C | MPa | 59 | 58 | 57 | 58 | 58 |
| GL | 60 ° | -- | 31.9 | 39.1 | 42.8 | 49.6 | 51.9 |

**Table 5. (cont.)**

| Test | Test Condition | Unit | C1 | E6 | E7 | E8 | E9 |
|---|---|---|---|---|---|---|---|
| MVR | 260 °C, 5 kg/360s | $cm^3$/10 min | 9.63 | 12 | 12.5 | 11.9 | 11.9 |
| MVR | 260 °C, 5 kg/1080s | $cm^3$/10 min | 10.3 | 13.3 | 13.3 | 14.1 | 14.6 |
| HDT | 1.8 MPa/3.2 mm | °C | 125.7 | 124 | 119.2 | 123.1 | 118 |
| NII | 23 °C/5.5 J | $kJ/m^2$ | 12 | 18 | 23 | 25 | 40 |
| NII | 0 °C/5.5 J | $kJ/m^2$ | 7.9 | 9.2 | 9.9 | 10.0 | 12.9 |
| MAI | 23 °C/2.3m/s/3.2mm | J | 55 | 53 | 55 | 54 | 55 |
| MAI | 0 °C/2.3m/s/3.2mm | J | 41 | 46 | 47 | 46 | 47 |
| TM | 5 mm/min / 23 °C | MPa | 4234 | 4192 | 4124 | 4062 | 3908 |
| TS | 5 mm/min / 23 °C | MPa | 59 | 59 | 58 | 57 | 56 |
| GL | 60 ° | -- | 31.9 | 49.2 | 51.8 | 49.2 | 54.7 |

As the data show, melt flow of the formulations increased as the PEO based additives were added. The small difference between the melt flow at the dwell time of 360 s and the dwell time of 1080 s indicates good melt stability for all the inventive formulations.

The HDT values decreased slightly upon addition of PEO based additives but still remained sufficiently high. Notably, formulations with 0.25% of PEO triblock copolymer additives exhibit minimal decreases in HDT while achieving improvement in impact strength.

As the data illustrates, tensile modulus and yield strength were maintained with the addition of PEO triblock copolymers levels. However, formulations containing PEO5 exhibited a modulus slightly lower than the control or formulations containing PEO triblock copolymer additives.

The data demonstrate that significant increase in notched Izod impact strength is achieved through the addition of small loadings of PEO based additives. For formulations containing 0.25% PEO based triblock copolymers, the melt flow showed increases of up to 25 %, and impact improvement of up to 100 %, all while the HDT was maintained to within 2 °C of the control sample. At 0.75 % loading level, further improvement in impact performance was observed. The Izod impact performance at 0 °C also showed a similar improvement trend in the impact strength. Further, the multiaxial impact data at 23 °C shows high total energy for all samples at the test conditions. However, at 0 °C, the formulations showed an appreciable increase in total energy upon addition of PEO based additives. Surprisingly, as quantified in Table 5, a further visible benefit of incorporating the PEO based additives, in addition to benefits in flow and impact, is an improvement in surface gloss of the molded parts. Accordingly, the data suggest PEO based additives assist in favorably offsetting the fundamental balance in properties towards a more favorable property profile that is an often difficult and an unobvious task to achieve. Further, particularly at low loadings, PEO additives allow for significant improvement in both the melt flow and impact strength while substantially maintaining the modulus (stiffness) and HDT.

Next, PEO additive effect on performance in the absence of a filler was evaluated. Table 6 describes the formulation of the PC/ABS formulations without any filler. The first sample (C2) contains no PEO additive and the second sample (C3) contained 0.75% PEO additive. The performance properties of the fillerless PC/ABS formulations are listed in Table 7.

**Table 6.**

| No. | Item | C2 | C3 |
|---|---|---|---|
| 1 | PC2 | 55.72 | 54.97 |
| 2 | PC1 | 26.51 | 26.51 |
| 3 | SAN | 11.22 | 11.22 |
| 4 | IM1 | 5.20 | 5.20 |
| 5 | PEO2 | | 0.75 |
| 6 | ADD1 | 0.25 | 0.25 |
| 7 | ADD2 | 0.25 | 0.25 |
| 8 | ADD3 | 0.25 | 0.25 |
| 9 | ADD4 | 0.1 | 0.1 |
| 10 | COL1 | 0.5 | 0.5 |
| **Total** | | **100** | **100** |

As the data in Table 7 show, the addition of PEO additive to fillerless PC/ABS formulation improved the flow, decreased HDT, and had no observable improvement in impact strength. The data suggest that for PEO additives, the impact strength improves only for filled PC/ABS formulations.

**Table 7.**

| Test | Test Condition | Unit | C2 | C3 |
|---|---|---|---|---|
| MVR | 260 °C, 5 kg/360s | $cm^3$/10 min | 19.3 | 24.2 |
| HDT | 1.8 MPa/3.2 mm | °C | 115.5 | 113.0 |
| NII | 23 °C/5.5 J | kJ/$m^2$ | 60.3 | 57.9 |
| NII | 0 °C/5.5 J | kJ/$m^2$ | 53.6 | 49.4 |
| MAI | 23 °C/2.3m/s/3.2mm | J | 2456 | 2442 |
| MAI | 0 °C/2.3m/s/3.2mm | J | 59.8 | 59.6 |

Further exemplary compositions of the present invention (E10 and E11) along with a control or comparator composition (control) for each sample (C4 is the control corresponding to E10 and C5 is the control corresponding to E11) are shown in Table 8. Performance properties were assessed for each composition, and the results are detailed in Table 9.

**Table 8.**

| No. | Item | C4 | C5 | E10 | E11 |
|---|---|---|---|---|---|
| 1 | PC2 | 51.29 | 39.91 | 50.54 | 37.91 |
| 2 | PC1 | 25.19 | 19.71 | 25.19 | 19.71 |
| 3 | SAN | 10.66 | 8.34 | 10.66 | 8.34 |
| 4 | IM1 | 4.94 | 3.86 | 4.94 | 3.86 |
| 5 | FIL1 | 5 | 25 | 5 | 25 |
| 6 | PEO1 | | | 0.75 | 2 |
| 7 | ADD1 | 0.25 | 0.25 | 0.25 | 0.25 |
| 8 | ADD2 | 0.25 | 0.25 | 0.25 | 0.25 |
| 9 | ADD3 | 0.25 | 0.25 | 0.25 | 0.25 |
| 10 | ADD4 | 0.1 | 0.1 | 0.1 | 0.1 |
| 11 | ADD5 | 0.07 | 0.33 | 0.07 | 0.33 |
| 12 | COL2 | 2 | 2 | 2 | 2 |
| **Total** | | **100** | **100** | **100** | **100** |

As the data in Table 9 show, the melt flow increase is observed at both 5% and 25% talc loading. The proximity

in values of melt flow at 1080 s dwell time indicates melt stability. HDT did decrease when the PEO additive was added, while impact performance as measured by notched Izod impact did not show an improvement for 5% talc formulation as the PEO based additive was incorporated. However, the notched Izod impact improved for 25% talc loading upon incorporation of the PEO based additive. The impact performance as measured with MAI shows that when PEO based additive was added, at 25% talc loading, the impact performance improved, as the total energy increased by more than 100% of the control value. Moreover, the 5 % talc sample did not undergo any change in terms of the total energy, although the melt flow improved. The data also show that the addition of PEO additive had minimal effect on tensile properties for the two talc loadings, as both values remained nearly the same when PEO additive was added.

**Table 9.**

| Test | Test Condition | Unit | C4 | C5 | E10 | E11 |
|---|---|---|---|---|---|---|
| MVR | 260 °C, 5 kg/360s | $cm^3$/10 min | 13.9 | 6.5 | 14.8 | 9.1 |
| MVR | 260 °C, 5 kg/1080s | $cm^3$/10 min | 14.3 | 6.87 | 13.8 | 10.4 |
| HDT | 1.8 MPa/3.2 mm | °C | 120.2 | 126.7 | 117.2 | 112.7 |
| NII | 23 °C/5.5 J | $kJ/m^2$ | 72.94 | 5.07 | 57.76 | 9.26 |
| MAI | 23 °C/2.3m/s/3.2mm | J | 57.8 | 11.6 | 56.5 | 25.2 |
| TM | 5 mm/min / 23 °C | MPa | 2836 | 5846 | 2978 | 5742 |
| TS | 5 mm/min / 23 °C | MPa | 56.8 | 64.2 | 57.6 | 59.9 |

Further exemplary compositions of the present invention (E12 through E13) using an alternative filler, Wollastonite, along with a control or comparator composition (C6) are shown in Table 10. Performance properties were assessed for each composition, and the results are detailed in Table 11.

**Table 10.**

| No. | Item | C6 | E12 | E13 |
|---|---|---|---|---|
| 1 | PC2 | 45.6 | 45.35 | 44.85 |
| 2 | PC1 | 22.45 | 22.45 | 22.45 |
| 3 | SAN | 9.5 | 9.5 | 9.5 |
| 4 | IM1 | 4.4 | 4.4 | 4.4 |
| 5 | FIL2 | 15 | 15 | 15 |
| 6 | PEO1 | 0 | 0.25 | 0.75 |
| 7 | ADD1 | 0.25 | 0.25 | 0.25 |
| 8 | ADD2 | 0.25 | 0.25 | 0.25 |
| 9 | ADD3 | 0.25 | 0.25 | 0.25 |
| 10 | ADD4 | 0.1 | 0.1 | 0.1 |
| 11 | ADD5 | 0.2 | 0.2 | 0.2 |
| 12 | COL2 | 2 | 2 | 2 |
| **Total** | | **100** | **100** | **100** |

As the data in Table 11 illustrate, when the PEO additive was added, the flow was observed to remain about the same as the control sample without the PEO additive. The impact properties as measured by Izod impact improved by more than 100% at 0.75 % PEO additive loading, while the total energy increased slightly.

**Table 11.**

| Test | Test Condition | Unit | C6 | E12 | E13 |
|---|---|---|---|---|---|
| MVR | 260 °C, 5 kg/360s | $cm^3$/10 min | 16.1 | 14.6 | 15.2 |
| MVR | 260 °C, 5 kg/1080s | $cm^3$/10 min | 17.3 | 17.5 | 16.8 |
| HDT | 1.8 MPa/3.2 mm | °C | 117.4 | 112.1 | 111 |
| NII | 23 °C/5.5 J | $kJ/m^2$ | 6.4 | 11.2 | 13.1 |
| MAI | 23 °C/2.3m/s/3.2mm | J | 42 | 41.7 | 45.9 |
| TM | 5 mm/min / 23 °C | MPa | 3032 | 2990 | 2880 |

(continued)

| Test | Test Condition | Unit | C6 | E12 | E13 |
|---|---|---|---|---|---|
| TS | 5 mm/min / 23 °C | MPa | 55.6 | 50.2 | 50 |

Further exemplary compositions of the present invention (E14 through E15) using 8% talc loading, along with a control or comparator composition (C7) are shown in Table 12. Performance properties were assessed for each composition, and the results are detailed in Table 13.

**Table 12.**

| No. | Item | C7 | E14 | E15 |
|---|---|---|---|---|
| 1 | PC2 | 49.59 | 49.34 | 48.84 |
| 2 | PC1 | 24.37 | 24.37 | 24.37 |
| 3 | SAN | 10.31 | 10.31 | 10.31 |
| 4 | IM1 | 4.78 | 4.78 | 4.78 |
| 5 | FIL1 | 8 | 8 | 8 |
| 6 | PEO1 | | 0.25 | 0.75 |
| 7 | ADD1 | 0.25 | 0.25 | 0.25 |
| 8 | ADD2 | 0.25 | 0.25 | 0.25 |
| 9 | ADD3 | 0.25 | 0.25 | 0.25 |
| 10 | ADD4 | 0.1 | 0.1 | 0.1 |
| 11 | ADD5 | 0.107 | 0.107 | 0.107 |
| 12 | COL2 | 2 | 2 | 2 |
| **Total** | | **100** | **100** | **100** |

As the data in Table 13 show, at 8% talc, the notched Izod impact is observed to improve as the PEO based additive is added. While no improvement in Izod impact occurred for fillerless formulation or for formulations containing 5% filler, improvements were observed at 8% filler level. This improvement indicates a surprising synergy exists between filler and PEO additive that manifests itself only when there is significant filler in the formulation. Significantly, the 0.25% PEO additive formulation was able to exhibit improvement in impact while maintaining the HDT.

**Table 13.**

| Test | Test Condition | Unit | C7 | E14 | E15 |
|---|---|---|---|---|---|
| MVR | 260 °C, 5 kg/360s | $cm^3/10min$ | 16.0 | 17.1 | 20.0 |
| HDT | 1.8 MPa/3.2 mm | °C | 121.6 | 121.2 | 117.9 |
| NII | 23 °C/5.5 J | $kJ/m^2$ | 17.7 | 28.4 | 24.5 |
| MAI | 23 °C/2.3m/s/3.2mm | J | 60.7 | 55.7 | 54.7 |

The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A thermoplastic composition comprising

a. a thermoplastic polymer component comprising at least one polycarbonate;
b. an impact modifier component;
c. 5 wt% - 30 wt% of a mineral filler component; and
d. a poly(alkylene oxide) additive component comprising poly(ethylene oxide) (PEO), or poly(propylene oxide) (PPO), or a combination thereof,

wherein the thermoplastic polymer component comprises a first polycarbonate and a second polycarbonate, and wherein the combined wt% value of the first polycarbonate and the second polycarbonate is from 40 wt% to 90 wt%

2. The thermoplastic composition of claim 1, comprising

a. from 30 wt% to less than 100 wt% of the thermoplastic polymer component;
b. from greater than 0 wt% to 10 wt% of the impact modifier component;
c. from 5 wt% to 30 wt% of the mineral filler component; and
d. from greater than 0 wt% to 5 wt% of the poly(alkylene oxide) additive component.

3. The thermoplastic composition of any of the preceding claims, comprising

a. from 40 wt% to 80 wt% of the thermoplastic polymer component;
b. from greater than 0 wt% to 10 wt% of the impact modifier component comprising an acrylonitrile-butadiene-styrene (ABS) polymer composition, a bulk polymerized ABS (BABS), or a methacrylate-butadiene-styrene (MBS) polymer composition, or a methacrylate-butadiene (MB) polymer composition or combinations thereof;
c. from 5 wt% to 30 wt% of the mineral filler component; and
d. from greater than 0 wt% to 2 wt% of the poly(alkylene oxide) additive component.

4. The thermoplastic composition of any of the preceding claims, wherein the first polycarbonate polymer is present in an amount from 10 wt% to 40 wt% and/or wherein the second polycarbonate polymer is present in an amount from 20 wt% to 60 wt%.

5. The thermoplastic composition of any of the preceding claims, wherein the thermoplastic polymer component comprises a first polycarbonate and a second polycarbonate, and, wherein the first polycarbonate polymer component has a weight average molecular weight from 10,000 to 30,000 grams/mole, as measured by Gel Permeation Chromatography GPC using bisphenol A (BPA) polycarbonate standards; and wherein the second polycarbonate polymer component has a weight average molecular weight from 10,000 to 40,000 grams/mole, as measured by Gel Permeation Chromatography GPC using bisphenol A (BPA) polycarbonate standards.

6. The thermoplastic composition of claim 1, wherein the impact modifier component comprises an acrylonitrile-butadiene-styrene (ABS) polymer composition, a bulk polymerized ABS (BABS) composition, a methacrylate-butadiene (MB) polymer composition, or a methacrylate-butadiene-styrene (MBS) polymer composition, or a methacrylate-butadiene (MB) polymer composition, or a combination thereof.

7. The thermoplastic composition of any of claims 1-6, wherein the impact modifier component comprises a methacrylate-butadiene-styrene (MBS) polymer composition, wherein preferably the MBS polymer composition is present in an amount from 2 wt% to 10 wt%, comprises butadiene content from 60 wt% to 80 wt%, and has a bulk density from 0.25 $g/cm^3$ to 0.55 $g/cm^3$

8. The thermoplastic composition of any of claims 1-7, wherein the impact modifier comprises an acrylonitrile-butadiene-styrene (ABS) polymer composition, and wherein
the ABS polymer composition is an emulsion polymerized ABS; or
the ABS polymer composition is a bulk-polymerized ABS; or
the ABS polymer composition comprises SAN-grafted emulsion ABS.

9. The thermoplastic composition of any of the preceding claims, wherein the mineral filler component comprises a particulate mineral filler having median particle size ($D_{50}$) from 0.2 $\mu$m to 20 $\mu$m, determined as indicated in the description, and wherein the mineral filler comprises at least one mineral filler selected from mica, talc, clay, wollastonite, zinc sulfide, zinc oxide, and titanium dioxide.

10. The thermoplastic composition of any of the preceding claims, wherein the poly(alkylene oxide) component is present in an amount from greater than 0 wt% to 2 wt% relative to the total weight of the composition.

11. The thermoplastic composition of any of the preceding claims, wherein the poly(alkylene oxide) component comprises one or more of a poly(ethylene oxide)-poly(ethylene oxide) copolymer, a block copolymer comprising at least one poly(ethylene oxide) block and at least one poly(propylene oxide) block or a poly(ethylene oxide)-poly(propylene oxide) block copolymer, or a poly(ethylene oxide)-poly(propylene oxide)-poly(ethylene oxide) (PEO-PPO-PEO) tri-block copolymer, or a poly(propylene oxide)-poly(ethylene oxide)-poly(propylene oxide) (PPO-PEO-PPO) tri-block copolymer, or a poly(propylene oxide) (PPO) homopolymer.

**12.** The thermoplastic composition of any of the preceding claims, wherein the poly(alkylene oxide) component comprises at least 10 wt% poly(ethylene oxide), or at least 30 wt% poly(ethylene oxide), or at least 50 wt% poly(ethylene oxide).

**13.** The thermoplastic composition of any of the preceding claims, further comprising an aromatic vinyl copolymer, wherein the aromatic vinyl copolymer is present in an amount from greater than 0 wt% to 20 wt%, and wherein the aromatic vinyl copolymer is a styrene acrylonitrile copolymer (SAN), alpha methyl styrene acrylonitrile copolymer (AMSAN), or methyl methacrylate styrene acrylonitrile copolymer (MMASAN), or a combination thereof.

**14.** An article of manufacture comprising the thermoplastic composition of any of the preceding claims.

**15.** A method for forming the thermoplastic composition of any of claims 1 - 14, comprising:

a. combining:

i. the thermoplastic polymer component;
ii. the impact modifier component;
iii. the mineral filler component; and
iv. the poly(alkylene oxide) additive component
wherein the step of combining preferably comprises extrusion blending.

## Patentansprüche

**1.** Thermoplastische Zusammensetzung, umfassend

a. eine thermoplastische Polymerkomponente, umfassend wenigstens ein Polycarbonat;
b. eine Schlagfestmodifikatoromponente;
c. 5 Gew.-% - 30 Gew.-% einer mineralischen Füllstoffkomponente; und
d. eine Poly(alkylenoxid)-Zusatzstoffkomponente, umfassend Poly(ethylenoxid) (PEO) oder Poly(propylenoxid) (PPO), oder eine Kombination davon,

wobei die thermoplastische Polymerkomponente ein erstes Polycarbonat und ein zweites Polycarbonat umfasst, und wobei der kombinierte Gew.-% Wert des ersten Polycarbonats und des zweiten Polycarbonats von 40 Gew.-% bis 90 Gew.-% beträgt.

**2.** Thermoplastische Zusammensetzung nach Anspruch 1, umfassend

a. von 30 Gew.-% bis weniger als 100 Gew.-% der thermoplastischen Polymerkomponente;
b. von mehr als 0 Gew.-% bis 10 Gew.-% der Schlagfestmodifikatorkomponente;
c. von 5 Gew.-% bis 30 Gew.-% der mineralischen Füllstoffkomponente und
d. von mehr als 0 Gew.-% bis 5 Gew.-% der Poly(alkylenoxid)-Zusatzstoffkomponente.

**3.** Thermoplastische Zusammensetzung nach einem der vorhergehenden Ansprüche, umfassend

a. von 40 Gew.-% bis 80 Gew.-% der thermoplastischen Polymerkomponente;
b. mehr als 0 Gew.-% bis 10 Gew.-% der Schlagfestmodifikatorkomponente, umfassend eine Acrylnitril-Butadien-Styrol- (ABS-) Polymerzusammensetzung, ein in Masse polymerisiertes ABS (BABS), oder eine Methacrylat-Butadien-Styrol- (MBS-) Polymerzusammensetzung, oder eine Methacrylat-Butadien- (MB-) Polymerzusammensetzung oder Kombinationen davon;
c. von 5 Gew.-% bis 30 Gew.-% einer mineralischen Füllstoffkomponente; und
d. von mehr als 0 Gew.-% bis 2 Gew.-% der Poly(alkylenoxid)-Zusatzstoffkomponente.

**4.** Thermoplastische Zusammensetzung nach einem der vorhergehenden Ansprüche, wobei das erste Polycarbonatpolymer in einer Menge von 10 Gew.-% bis 40 Gew.-% vorhanden ist und/oder wobei das zweite Polycarbonatpolymer in einer Menge von 20 Gew.-% bis 60 Gew.-% vorhanden ist.

5. Thermoplastische Zusammensetzung nach einem der vorhergehenden Ansprüche, wobei die thermoplastische Polymerkomponente ein erstes Polycarbonat und ein zweites Polycarbonat umfasst, und wobei die erste Polycarbonatpolymerkomponente ein gewichtsmittleres Molekulargewicht von 10.000 bis 30.000 Gramm/Mol aufweist, gemessen durch Gelpermeationschromatographie GPC unter Verwendung von Bisphenol A- (BPA-) Polycarbonat-Standards; und wobei die zweite Polycarbonatpolymerkomponente ein gewichtsmittleres Molekulargewicht von 10.000 bis 40.000 Gramm/Mol aufweist, gemessen durch Gelpermeationschromatographie GPC unter Verwendung von Bisphenol A- (BPA-) Polycarbonat-Standards.

6. Thermoplastische Zusammensetzung nach Anspruch 1, wobei die Schlagfestmodifikatorkomponente eine Acrylnitril-Butadien-Styrol- (ABS-) Polymerzusammensetzung, eine in der Masse polymerisierte ABS (BABS-) Zusammensetzung, eine Methacrylat-Butadien- (MB-) Polymerzusammensetzung, eine Methacrylat-Butadien-Styrol- (MBS-) Polymerzusammensetzung oder eine Methacrylat-Butadien- (MB-) Polymerzusammensetzung oder eine Kombination davon umfasst.

7. Thermoplastische Zusammensetzung nach einem der Ansprüche 1-6, wobei die Schlagfestmodifikatorkomponente eine Methacrylat-Butadien-Styrol- (MBS-) Polymerzusammensetzung umfasst, wobei vorzugsweise die MBS-Polymerzusammensetzung in einer Menge von 2 Gew.-% bis 10 Gew.-% vorliegt, einen Butadiengehalt von 60 Gew.-% bis 80 Gew.-% umfasst und eine Schüttdichte von 0,25 g/cm$^3$ bis 0,55 g/cm$^3$ aufweist.

8. Thermoplastische Zusammensetzung nach einem der Ansprüche 1-7, wobei der Schlagfestmodifikator eine Acrylnitril-Butadien-Styrol- (ABS-) Polymerzusammensetzung umfasst, und wobei
die ABS-Polymerzusammensetzung ein emulsionspolymerisiertes ABS ist; oder
die ABS-Polymerzusammensetzung ein massenpolymerisiertes ABS ist; oder
die ABS-Polymerzusammensetzung ein SAN-gepfropftes Emulsions-ABS umfasst.

9. Thermoplastische Zusammensetzung nach einem der vorhergehenden Ansprüche, wobei die mineralische Füllstoffkomponente einen teilchenförmigen mineralischen Füllstoff umfasst, der eine mittlere Teilchengröße ($D_{50}$) von 0,2 $\mu$m bis 20 $\mu$m umfasst, bestimmt wie in der Beschreibung angezeigt, und wobei der mineralische Füllstoff wenigstens einen mineralischen Füllstoff umfasst, der aus Glimmer, Talk, Ton, Wollastonit, Zinksulfid, Zinkoxid und Titandioxid ausgewählt ist.

10. Thermoplastische Zusammensetzung nach einem der vorhergehenden Ansprüche, wobei die Poly(alkylenoxid)-Komponente in einer Menge von mehr als 0 Gew.-% bis 2 Gew.-% bezogen auf das Gesamtgewicht der Zusammensetzung vorhanden ist.

11. Thermoplastische Zusammensetzung nach einem der vorhergehenden Ansprüche, wobei die Poly(alkylenoxid)-Komponente ein oder mehrere von einem Poly(ethylenoxid)-Poly(ethylenoxid)-Copolymer, einem Blockcopolymer, umfassend wenigstens einen Poly(ethylenoxid)-Block und wenigstens einen Poly(propylenoxid)-Block oder einen Poly(ethylenoxid)-Poly(propylenoxid)-Blockcopolymer, oder einem Poly(ethylenoxid)-Poly(propylenoxid)-Poly(ethylenoxid) (PEO-PPO-PEO-) Tri-Blockcopolymer oder einem Poly(propylenoxid)-Poly(ethylenoxid)-Poly(propylenoxid) (PPO-PEO-PPO-) Tri-Blockcopolymer oder einem Poly(propylenoxid) (PPO-) Homopolymer umfasst.

12. Thermoplastische Zusammensetzung nach einem der vorhergehenden Ansprüche, wobei die Poly(alkylenoxid)-Komponente mindestens 10 Gew.-% Poly(ethylenoxid) oder wenigstens 30 Gew.-% Poly(ethylenoxid), oder wenigstens 50 Gew.-% Poly(ethylenoxid) umfasst.

13. Thermoplastische Zusammensetzung nach einem der vorangehenden Ansprüche, die ferner ein aromatisches Vinyl-Copolymer umfasst, wobei das aromatische Vinyl-Copolymer in einer Menge von mehr als 0 Gew.-% bis 20 Gew.-% vorhanden ist, wobei das aromatische Vinyl-Copolymer ein Styrol-Acrylnitril-Copolymer (SAN), ein Alpha-Methyl-Styrol-Acrylnitril-Copolymer (AMSAN) oder Methyl-Methacrylat-Styrol-Acrylnitril-Copolymer (MMASAN) oder eine Kombination davon ist.

14. Herstellungsgegenstand, umfassend die thermoplastische Zusammensetzung nach einem der vorangehenden Ansprüche.

15. Verfahren zum Ausbilden der thermoplastischen Zusammensetzung nach einem der Ansprüche 1-14, umfassend:

a. Kombinieren:

i. der thermoplastischen Polymerkomponente;
ii. der Schlagfestmodifikatorkomponente;
iii. der mineralischen Füllstoffkomponente; und
iv. der Poly(alkylenoxid)-Zusatzstoffkomponente

wobei der Schritt des Kombinierens vorzugsweise ein Extrusionsmischen umfasst.

## Revendications

**1.** Composition thermoplastique comprenant

a. un composant polymère thermoplastique comprenant au moins un polycarbonate ;
b. un composant modificateur d'impact ;
c. 5% en poids à 30% en poids d'un composant de charge minérale ; et
d. un composant additif de poly(oxyde d'alkylène) comprenant du poly(oxyde d'éthylène) (PEO), ou du poly(oxyde de propylène) (PPO), ou une combinaison de ceux-ci,

dans laquelle le composant polymère thermoplastique comprend un premier polycarbonate et un second polycarbonate, et dans laquelle la valeur en % en poids combinée du premier polycarbonate et du second polycarbonate est de 40% en poids à 90% en poids.

**2.** Composition thermoplastique selon la revendication 1, comprenant

a. de 30% en poids à moins de 100% en poids du composant polymère thermoplastique ;
b. de plus de 0% en poids à 10% en poids du composant modificateur d'impact ;
c. de 5% en poids à 30% en poids du composant de charge minérale ; et
d. de plus de 0% en poids à 5% en poids du composant additif de poly(oxyde d'alkylène).

**3.** Composition thermoplastique selon l'une quelconque des revendications précédentes, comprenant

a. de 40% en poids à 80% en poids du composant polymère thermoplastique ;
b. de plus de 0% en poids à 10% en poids du composant modificateur d'impact comprenant une composition polymère acrylonitrile-butadiène-styrène (ABS), une composition ABS polymérisée en masse (BABS) ou une composition polymère méthacrylate-butadiène-styrène (MBS), ou une composition de polymère méthacrylate-butadiène (MB) ou des combinaisons de celles-ci ;
c. de 5% en poids à 30% en poids du composant de charge minérale ; et
d. de plus de 0% en poids à 2% en poids du composant additif poly(oxyde d'alkylène).

**4.** Composition thermoplastique selon l'une quelconque des revendications précédentes, dans laquelle le premier polymère polycarbonate est présent en une quantité de 10% en poids à 40% en poids et / ou dans laquelle le second polymère polycarbonate est présent en une quantité de 20% en poids à 60% en poids.

**5.** Composition thermoplastique selon l'une quelconque des revendications précédentes, dans laquelle le composant polymère thermoplastique comprend un premier polycarbonate et un second polycarbonate, et, dans laquelle le premier composant polymère polycarbonate a un poids moléculaire moyen en poids de 10.000 à 30.000 grammes/mole, tel que mesuré par chromatographie par perméation de gel GPC en utilisant des étalons de polycarbonate de bisphénol A (BPA); et dans laquelle le second composant polymère polycarbonate a un poids moléculaire moyen en poids de 10 000 à 40 000 grammes / mole, tel que mesuré par chromatographie par perméation de gel GPC en utilisant des normes de polycarbonate de bisphénol A (BPA).

**6.** Composition thermoplastique selon la revendication 1, dans laquelle le composant modificateur d'impact comprend une composition polymère acrylonitrile-butadiène-styrène (ABS), une composition ABS polymérisée en masse (BABS), une composition polymère méthacrylate-butadiène (MB), ou une composition polymère méthacrylate-butadiène-styrène (MBS), ou une composition de polymère de méthacrylate-butadiène (MB), ou une combinaison de celles-ci.

**7.** Composition thermoplastique selon l'une quelconque des revendications 1 à 6, dans laquelle le composant modificateur d'impact comprend une composition polymère méthacrylate-butadiène-styrène (MBS), dans laquelle de préférence la composition de polymère MBS est présente en une quantité de 2% en poids à 10% en poids, comprend une teneur en butadiène de 60% en poids à 80% en poids, et a une densité apparente de 0,25 g/$cm^3$ à 0,55 g/$cm^3$.

**8.** Composition thermoplastique selon l'une quelconque des revendications 1 à 7, dans laquelle le modificateur d'impact comprend une composition polymère d'acrylonitrile-butadiène-styrène (ABS), et dans laquelle
la composition polymère ABS est une composition ABS polymérisée en émulsion ; ou
la composition polymère ABS est une composition ABS polymérisée en masse ; ou
la composition polymère ABS comprend une émulsion ABS greffée sur SAN.

**9.** Composition thermoplastique selon l'une quelconque des revendications précédentes, dans laquelle le composant de charge minérale comprend une charge minérale particulaire ayant une taille de particule médiane ($D_{50}$) de 0,2 $\mu$m à 20 $\mu$m, déterminée comme indiqué dans la description, et dans laquelle la charge minérale comprend au moins une charge minérale choisie parmi le mica, le talc, l'argile, la wollastonite, le sulfure de zinc, l'oxyde de zinc et le dioxyde de titane.

**10.** Composition thermoplastique selon l'une quelconque des revendications précédentes, dans laquelle le composant poly(oxyde d'alkylène) est présent en une quantité de plus de 0% en poids à 2% en poids par rapport au poids total de la composition.

**11.** Composition thermoplastique selon l'une quelconque des revendications précédentes, dans laquelle le composant poly(oxyde d'alkylène) comprend un ou plusieurs parmi un copolymère poly(oxyde d'éthylène)-poly(oxyde d'éthylène), un copolymère bloc comprenant au moins un bloc poly(oxyde d'éthylène) et au moins un bloc poly(oxyde de propylène) ou un copolymère bloc poly(oxyde d'éthylène)-poly(oxyde de propylène), ou un copolymère tri-bloc poly(oxyde d'éthylène)-poly(oxyde de propylène)-poly(oxyde d'éthylène) (PEO- PPO-PEO), ou un copolymère tri-bloc poly(oxyde de propylène)-poly(oxyde d'éthylène)-poly(oxyde de propylène) (PPO-PEO-PPO), ou un homopolymère poly(oxyde de propylène) (PPO).

**12.** Composition thermoplastique selon l'une quelconque des revendications précédentes, dans laquelle le composant poly(oxyde d'alkylène) comprend au moins 10% en poids de poly(oxyde d'éthylène), ou au moins 30% en poids de poly(oxyde d'éthylène), ou au moins 50% en poids de poly(oxyde d'éthylène).

**13.** Composition thermoplastique selon l'une quelconque des revendications précédentes, comprenant en outre un copolymère vinylique aromatique, dans laquelle le copolymère vinylique aromatique est présent en une quantité de plus de 0% en poids à 20% en poids, et dans laquelle le copolymère vinylique aromatique est un copolymère styrène acrylonitrile (SAN), copolymère alpha méthylstyrène acrylonitrile (AMSAN) ou copolymère méthacrylate de méthyle styrène acrylonitrile (MMASAN), ou une combinaison de ceux-ci.

**14.** Article manufacturé comprenant la composition thermoplastique selon l'une quelconque des revendications précédentes.

**15.** Procédé pour former la composition thermoplastique selon l'une quelconque des revendications 1 à 14, comprenant :

a. la combinaison :

i. du composant polymère thermoplastique ;
ii. du composant modificateur d'impact ;
iii. du composant de charge minérale ; et
iv. du composant additif poly(oxyde d'alkylène)

dans lequel l'étape de combinaison comprend de préférence un mélange par extrusion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009017938 A
- US 7786246 B
- US 4217438 A
- US 3635895 A
- US 4001184 A


### Non-patent literature cited in the description


- *CHEMICAL ABSTRACTS,* 80-05-7